# EUROPÄISCHE PATENTSCHRIFT

(11) **EP 4 433 254 B1**
(45) Veröffentlichungstag und Bekanntmachung des Hinweises auf die Patenterteilung: **24.06.2026**
(21) Anmeldenummer: 22843608.5
(22) Anmeldetag: 16.12.2022
(51) Int. Cl.: B23K 26/08, B23K 26/14, B23K 26/70

(54) **VERFAHREN ZUM ERKENNEN EINER LINSE UND/ODER DÜSE AN EINER FOKUSSIEREINHEIT EINES LASERPLOTTERS ZUM SCHNEIDEN, GRAVIEREN, MARKIEREN UND/ODER BESCHRIFTEN EINES WERKSTÜCKES, SOWIE EINE LINSENHALTERUNG, EINE DÜSENHALTERUNG UND EINEN LASERPLOTTER ZUM GRAVIEREN, MARKIEREN UND/ODER BESCHRIFTEN EINES WERKSTÜCKES HIERFÜR**
METHOD FOR DETECTING A LENS AND/OR NOZZLE ON A FOCUSSING UNIT OF A LASER PLOTTER FOR CUTTING, ENGRAVING, MARKING AND/OR INSCRIBING A WORKPIECE, AND LENS HOLDER, NOZZLE HOLDER, AND LASER PLOTTER FOR ENGRAVING, MARKING AND/OR INSCRIBING A WORKPIECE THEREFOR
PROCÉDÉ DE DÉTECTION D'UN OCULAIRE ET/OU D'UNE BUSE SUR UNE UNITÉ DE FOCALISATION D'UN TRACEUR LASER POUR COUPER, GRAVER, MARQUER ET/OU INSCRIRE SUR UNE PIÈCE, ET SUPPORT D'OCULAIRE, SUPPORT DE BUSE ET TRACEUR LASER POUR GRAVER, MARQUER ET/OU INSCRIRE SUR UNE PIÈCE ASSOCIÉE

(30) Priorität: 19.01.2022 AT 500202022; 20.09.2022 AT 507232022
(43) Veröffentlichungstag der Anmeldung: 25.09.2024
(73) Patentinhaber: Trotec Laser GmbH, 4614 Marchtrenk (AT)
(72) Erfinder: HAGER, Paul, 4654 Bad Wimsbach (AT)
(86) Internationale Anmeldenummer: PCT/AT2022/060446
(87) Internationale Veröffentlichungsnummer: WO 2023/137507

(56) Entgegenhaltungen:
- EP-A1- 2 540 432
- EP-A2- 1 600 247
- JP-A- 2004 322 127
- US-A1- 2018 193 946

## Beschreibung

Die Erfindung betrifft ein Verfahren zum Erkennen einer Linse und/oder Düse an einer Fokussiereinheit eines Laserplotters zum Schneiden, Gravieren, Markieren und/oder Beschriften eines Werkstückes, sowie eine Linsenhalterung, eine Düsenhalterung und einen Laserplotter zum Gravieren, Markieren und/oder Beschriften eines Werkstückes, wie sie in den Ansprüchen 1, 16, 18, und 19 beschrieben sind.

Aus dem Stand der Technik sind bereits Lasermaschinen bzw. Laserplotter bekannt, bei denen eine oder mehrere Laserquellen betrieben werden. Hierzu wird von der Laserquelle ein Laserstrahl an einen Laserkopf oder eine Fokussiereinheit gesendet, wobei der Laserstrahl im Laserkopf oder der Fokussiereinheit über ein optisches Element, insbesondere eine Linse, fokussiert wird. Des Weiteren weisen der Laserkopf oder das Fokussierelement bzw. die Fokussiereinheit eine Düse auf, wobei die Auswahl der richtigen Düse die Qualität der Bearbeitung, insbesondere der Gravur, beeinflusst und die Düse gleichzeitig einen Schutz der Linse von Staub oder Schmauch bietet.

Aus der DE 10 2011 078 359 A1 ist ein System für einen Laserkopf bekannt, bei dem an einem optischen Element, insbesondere einer Linse, ein Transponder angeordnet ist, der auslesbare Informationen enthält. Die Informationen werden von einer dem Transponder zugeordneten Schreib- und/oder Leseeinheit ausgelesen. Das optische Element und die dazugehörige Schreib- und/oder Leseeinheit sind dabei im Inneren des Gehäuses des Laserkopfes angeordnet. Nachteilig ist hierbei, dass die Linse im Inneren des Laserkopfes angeordnet ist und somit ein einfacher und schneller Tausch nicht möglich ist.

Aus der JP2004322127A ist eine Laserstrahlmaschine und ein Verfahren zur Handhabung von Linse und Düse bekannt, bei der am Laserkopf für die Linse und Düse Strichcodes als Unterscheidungsmedium angebracht sind. Zum Abfragen der Unterscheidungsmedium ist im Bearbeitungsraum der Laserstrahlmaschine ein Strichcodeleser in der Nähe des Arbeitstisches vorgesehen, sodass während der Abfrage der Strichcodes der Laserkopf am Strichcodeleser positioniert ist. Nachteilig ist hierbei, dass eine spezielle Position außerhalb des Arbeitstisches zum Abfragen/Erkennen der Linse und Düse angefahren werden muss.

Weiters ist aus der WO2016093053A1 eine Laserbearbeitungsmaschine mit einem Düsenmontageverfahren bekannt, bei dem im Inneren des Laserkopf eine Bildaufnahmeelement zur Aufnahme eines Bildes angeordnet ist, über das ein Code von an einen Düsenablageplatz abgelegten Düsen aufgenommen und erkannt wird, sodass eine entsprechende Düse am Laserkopf ausgewählt und befestigt werden kann. Nachteilig ist hierbei, dass der Laserkopf eine zusätzliche Komponente nämlich das Bildaufnahmeelement aufweisen muss, wodurch der Aufbau des Laserkopfes sehr kompliziert und aufwendig ist.

Aus der WO2020127492A1 ist eine Metallbearbeitungsvorrichtung mit einer Gasdüse bekannt, bei der eine elektronische Kamera zum Erfassen eines digitalen Bildes der Gasdüse vorgesehen ist. Die Kamera ist hierzu in einer Düsenzentrierstation angeordnet, wobei der Laserkopf über der Kamera stationiert wird, sodass eine Bildaufnahme der Gasdüse mit der Düsenaustrittsöffnung von unten erfolgt, um den Verschleißgrad der Gasdüse zu ermitteln.

Weiters ist aus der EP 1600247 A2 eine Laserbearbeitungsmaschine bekannt, die mit einem Düsenprüfsystem bzw. -gerät ausgestattet ist. Dabei wird der Bearbeitungskopf der Lasermaschine über ein Aufnahmemittel in Form einer Kamera positioniert, sodass etwaige Anomalitäten, wie Fremdkörper, Verformung oder Spitzenfehler, der Düse überprüft werden.

Aus der EP 2540432 A1 ist eine Laserbearbeitungsmaschine bekannt, bei der eine Kamera am Bearbeitungskopf der Lasermaschine senkrecht angeordnet ist, die mit dem Bearbeitungskopf mitgeführt wird. Dabei kann die Kamera über einen Umlenkspiegel einen Code von der Düse und/oder den Zustand, insbesondere die Verschmutzung, der Düse, erfassen.

In der JP 2004322127 A ist ebenfalls eine Lasermaschine beschrieben, bei der ein Code, insbesondere Barcode, seitlich am Laserkopf, insbesondere an der Düse, angebracht ist. Zum Ablesen des Codes muss der Laserkopf außerhalb des Bearbeitungsbereich verfahren werden, wo ein Barcode-Scanner zum seitlichen Ablesen des Codes, angeordnet ist.

Weiters ist aus der US 2018/0193946 A1 ein Laserplotter bekannt, der mit einer Distanzmessvorrichtung am Laserkopf ausgestattet ist.

Weiters sind bereits Systeme des Anmelders, insbesondere der Trotec Laser GmbH, bekannt, bei denen das optische Element, insbesondere die Linse, in ein Linsengehäuse integriert ist, wobei das Linsengehäuse von außen in ein Aufnahmeelement bzw. einer Linsenaufnahme einsetzbar ist. Dadurch ist ein einfacher Tausch oder Reinigung der Linse möglich, in dem ein Befestigungsrad durch Verdrehen das geklemmte Linsengehäuse der Linse frei gibt und das Linsengehäuse samt der Linse entnommen werden kann. Nachteilig ist hierbei, dass zwar ein einfacher Tausch möglich ist, jedoch bei einem Tausch der Linse der Typ der Linse manuell in der Software eingestellt werden muss. Dadurch kann es vorkommen, dass in der Software falsche Werte eingegeben oder ausgewählt werden oder dass der Nutzer auf die Anpassung der Linsenparameter in der Software vergisst.

Die Aufgabe der Erfindung liegt darin, ein Verfahren zum Erkennen einer Linse und/oder Düse an einer Fokussiereinheit eines Laserplotters, eine Linsenhalterung, eine Düsenhalterung und einen Laserplotter hierzu zu schaffen, bei dem einerseits die obgenannten Nachteile vermieden werden und andererseits eine hohe Bedienerfreundlichkeit erreicht wird.

Die Aufgabe wird durch die Erfindung gelöst. Vorteilhafte Ausbildungen und/oder Verfahrensmaßnahmen sind in den Unteransprüchen beschrieben.

Die Aufgabe der Erfindung wird durch ein Verfahren zum Erkennen einer Linse und/oder Düse an einer Fokussiereinheit eines Laserplotters zum Schneiden, Gravieren, Markieren und/oder Beschriften eines Werkstückes gelöst, bei dem die Kamera im Deckel des Gehäuses des Laserplotters angeordnet wird und sowohl in geschlossener als auch geöffneter Position des Deckels auslösbar ist, wobei zum Ermitteln der Linse und/oder Düse die Fokussiereinheit auf eine definierte Position, bei der die Linse und/oder Düse für die Kamera im Deckel gut sichtbar ist, verstellt wird, worauf über die Kamera im Deckel ein Bild der Fokussiereinheit aufgenommen wird und über ein Analysetool die Linse und/oder Düse am Bild erkannt wird.

Vorteilhaft ist hierbei, dass durch die Verstellung oder Verfahren der Fokussiereinheit auf eine Position, bei der die Linse, insbesondere das Linsengehäuse, und/oder die Düse sehr gut sichtbar ist, erreicht wird, dass damit ein mit ausreichend hoher Qualität aufgenommenes Bild erzeugt werden kann, sodass eine sichere Auswertung der Linse und/oder Düse möglich ist. Würde die Fokussiereinheit bei Aktivierung zur Linsen- und/oder Düsenerkennung in der Ruheposition zum Aufnehmen des Bildes verbleiben, so wäre ein sehr großer Abstand der Fokussiereinheit zur bevorzugt am Deckel des Laserplotters angeordneten Kamera gegeben, sodass die Auswertung des aufgenommenen Bildes keine Details, wie Aufdrucke, Beschriftungen, Gravuren, Farben erkennen lassen würde. Somit ist es vorteilhaft, wenn die Fokussiereinheit möglichst nahe an die Kamera verfahren bzw. positioniert wird, sodass ein gut sichtbares Bild, insbesondere im Nahbereich der Kamera, von der Fokussiereinheit oder einen Teil der Fokussiereinheit aufgenommen wird. Hierbei ist es auch möglich, dass die Tischhöhe entsprechend eingestellt wird, um ein qualitativ hochwertiges Bild aufnehmen zu können. Dabei ist es auch möglich, dass für die Ermittlung der Linse und/oder Düse auch mehrere unterschiedliche Positionen angefahren werden, wobei jedes Mal ein Bild zur Auswertung vom Analysetool aufgenommen wird. Weiters ist es auch möglich, dass je nach eingestellter Linse und/oder Düse in der Software verschiedene Positionen zum Aufnehmen eines Bildes angefahren werden, um für die Kontrolle der verwendeten Linse und/oder Düse das bestmögliche Bild erzeugen zu können. Es ist auch möglich, dass bei mehreren Kameras im Deckel nur eine Kamera zur Aufnahme eines Bildes für die Erkennung der Linse und/oder Düse aktiviert ist. Weiters ist es möglich, dass eine eigene Kamera für die Erkennung der Linse und/oder Düse eingesetzt wird, wobei diese Kamera ebenfalls im Deckel oder auch an den Seitenwänden des Bearbeitungsraums positioniert sein kann. Des Weiteren ist es möglich, dass die Bildaufnahme der Linse und/oder Düse nicht direkt, sondern über einen oder mehrere Spiegel im Bearbeitungsraum erfolgt. Erfindungsgemäß ist vorgesehen, dass die Kamera im Deckel des Gehäuses des Laserplotters angeordnet wird und sowohl in geschlossener als auch geöffneter Position des Deckels auslösbar ist. Dadurch wird erreicht, dass die Kamera, die für das Erfassen der Position eines eingelegten Werkstückes im Bearbeitungsraum eingesetzt wird, auch für die Erkennung der Linse und/oder Düse verwendet werden kann. Somit kann mit einer Kamera für die Ermittlung einer Position eines Werkstücks in einem Bearbeitungsraum eines Laserplotter und das Erkennen einer Linse und/oder Düse an einer Fokussiereinheit eines Laserplotters das Auslangen gefunden werden. Selbstverständlich ist es aber auch möglich, dass für die Erkennung der Linse und/oder Düse eine eigene Kamera angeordnet wird, sodass je nach Position dieser Kamera die Fokussiereinheit zum Aufnehmen eines Bildes verstellt wird.

Von Vorteil sind die Maßnahmen, bei denen die Erkennung der Linse über optische Merkmale, wie die Farbe des Linsengehäuses oder einen Aufdruck am Linsengehäuse oder eine Beschriftung oder Gravur am Linsengehäuse oder die geometrische Form oder Oberflächenstruktur des Linsengehäuses, erfolgt. Dadurch ist es möglich, dass auf unterschiedliche Arten die Erkennung der Linse durchgeführt werden kann. Einerseits ist es möglich, dass durch die verwendete Farbe für das Linsengehäuse diese Farbe ausgewertet werden kann und anschließend in einer Datenbank ein hinterlegter numerischer Wert der Farbe, der der Linse entspricht, zugeordnet werden kann. Andererseits ist es möglich, dass der numerische Wert oder eine Codierung bzw. Code, wie beispielsweise QR-Code, Datamatrix, insbesondere ein Datamatrix Code ECC200, Strichcode, Grafik oder ein eigener generierter Code, auf dem Linsengehäuse aufgedruckt, geklebt, beschriftet oder graviert ist und der numerische Wert direkt vom Analysetool ausgewertet wird. Ebenfalls kann die Form bzw. Ausbildung des Linsengehäuses erkannt werden und wiederum mit einer Datenbank abgeglichen werden. Es ist auch eine Kombination der optischen bzw. geometrischen Merkmale möglich.

Es sind aber auch die Maßnahmen von Vorteil, bei denen die Erkennung der Düse über optische Merkmale, wie die Farbe des Düsengehäuses oder einen Aufdruck am Düsengehäuse oder eine Beschriftung oder Gravur am Düsengehäuse oder die geometrische Form oder Oberflächenstruktur des Düsengehäuses, erfolgt. Dadurch wird erreicht, dass auch die Düse auf unterschiedliche Arten erkannt werden kann. Wie zuvor für die Erkennung der Linse beschrieben, sind diese Varianten auch für die Erkennung der Düse möglich. Dadurch können die unterschiedlichsten Düsen zum eingestellten Bearbeitungsprozess eingestellt und/oder überprüft werden. Beispielsweise wird eine kurze Düse mit großem Lochdurchmesser (7mm) für den Laserstrahl zum Gravieren und Schneiden eingesetzt, wobei beim Schneiden von Arcryl diese Düse bevorzugt wird, da das Material nicht so schnell abkühlt und dadurch eine schöne Kante entsteht. Die Verwendung einer kurzen Düse mit kleinem Lochdurchmesser (3mm) wird hauptsächlich verwendet zum Schneiden von schmauchenden Materialien, wie beispielsweise Holz, da durch die kleine Lochöffnung der Luftstrom konzentriert wird, wodurch entsprechende Schmauch und Schneidgase weggeblasen werden. Diese Düse eignet sich jedoch nicht zum Gravieren von staubintensiven Materialien, wie z.B. Kunststoff, Gummi, da dadurch die kleine Öffnung der Düse schnell verlegt wird. Auch ist der Einsatz einer langen Düse mit beispielsweise kleinem Lochdurchmesser (3mm) von Vorteil, wenn ein Fokusabstand beim Einsatz einer 2,5" Linse zum Material ausgeglichen werden soll. Selbstverständlich können noch andere Ausbildungen von Düsen eingesetzt werden.

Vorteilhaft sind die Maßnahmen, bei denen zu den Linsen und/oder Düsen Kriterien oder Vorgabewerte in einer Datenbank hinterlegt werden. Dadurch wird erreicht, dass spezielle Daten, wie beispielsweise die Brennweite, für den Einsatz einer bestimmten Linse abgerufen werden können, um einen korrekten Bearbeitungsprozess durchführen zu können. Insbesondere beim Tausch der Linse ist es wesentlich, dass die wichtigsten Parameter abgerufen und eingestellt werden, um eine korrekte Bearbeitung des Werkstückes zu ermöglichen. Beispielsweise wird die Bearbeitungstischposition bzw. Bearbeitungstischhöhe durch das Ändern einer Linse ebenfalls geändert, da die neue Linse eine andere Brennweite aufweist. Somit wird eine automatische Anpassung der wesentlichen Parameter in der Software durchgeführt, sodass der User keinerlei Anpassungen vornehmen muss.

Vorteilhaft sind die Maßnahmen, bei denen die erkannte Linse und/oder Düse mit der in der Steuereinheit oder einer Software eingestellten Linse und/oder Düse verglichen wird oder bei denen die erkannte Linse und/oder Düse von der Steuereinheit übernommen wird. Dadurch wird erreicht, dass ein Tausch einer Linse und/oder Düse automatisch erkannt wird. Hierbei wird bei fehlender Übereinstimmung der eingesetzten Linse und/oder Düse mit der eingestellten Linse und/oder Düse der Anwender beispielsweise durch Öffnen eines Fensters an der angeschlossenen Komponente, insbesondere Laptop, darauf hingewiesen, dass die verwendete Linse und/oder Düse nicht mit der eingestellten Linse und/oder Düse übereinstimmt. Vorzugsweise wird weiters abgefragt, ob die neu verwendete Linse und/oder Düse übernommen werden soll. Stimmen die Linse und/oder Düse überein, so kann beispielsweise der Bearbeitungsprozess gestartet werden. Hierbei ist es möglich, dass nach dem Aktivieren des Bearbeitungsprozess automatisch eine Abfrage bzw. Überprüfung der Linse und/oder Düse durchgeführt wird.

Es sind aber auch die Maßnahmen von Vorteil, bei denen von der Kamera mehrere Bilder der Fokussiereinheit bzw. der Linse und/oder Düse, an unterschiedlichen Positionen der Fokussiereinheit, aufgenommen werden. Dadurch wird sichergestellt, dass aus der Vielzahl von aufgenommenen Bildern zumindest ein Bild mit guter Qualität zur Auswertung vom Analysetool erzeugt wird.

Vorteilhaft sind die Maßnahmen, bei denen von der Kamera ein Referenzbild der Fokussiereinheit aufgenommen und in einer Datenbank hinterlegt wird. Dadurch wird erreicht, dass ein einfacher und schneller Vergleich des aufgenommenen Bildes mit dem Referenzbild möglich ist.

Von Vorteil sind die Maßnahmen, bei denen am Referenzbild die Position der Linse und/oder Düse festgelegt und ein neu aufgenommenes Bild an dieser Position ausgewertet wird. Dadurch wird erreicht, dass eine schnelle Auswertung ermöglicht wird, da die auszuwertenden Bereiche im Referenzbild hinterlegt sind.

Vorteilhaft sind die Maßnahmen, bei denen nach der Erkennung der Linse und/oder Düse diese mit der in der Software hinterlegten Linse und/oder Düse verglichen wird. Dadurch wird erreicht, dass damit Abweichungen automatisch festgestellt werden.

Von Vorteil sind die Maßnahmen, bei denen die Erkennung der Linse und/oder Düse beim Start eine Jobs durchgeführt wird. Dadurch wird sichergestellt, dass beim Aufruf eines Jobs ohne angeschlossene externe Komponente die Überprüfung der verwendeten Linsen und/oder Düse durchgeführt wird.

Vorteilhaft sind die Maßnahmen, bei denen die erkannte Linse und/oder Düse auf einem Speichermedium, insbesondere in einer Cloud, gespeichert werden. Dadurch wird erreicht, dass dadurch ein einfacher Zugang für Fernwartung möglich ist. Weiters können damit Daten gesammelt werden, die für Garantieabwicklungen herangezogen werden können.

Es sind aber auch die Maßnahmen von Vorteil, bei denen zum Bearbeiten des Werkstückes ein von der Strahlenquelle abgegebener Laserstrahl über vorzugsweise Umlenkelemente an zumindest eine Fokussiereinheit gesendet wird, von der der Laserstrahl in Richtung Werkstück abgelenkt und zur Bearbeitung fokussiert wird, wobei die Steuerung über eine in einer Steuereinheit laufende Software vorzugsweise durch Abarbeitung eines sogenannten Jobs, insbesondere von übergebenen oder geladenen Daten, erfolgt, wobei das Werkstück durch Verstellung eines Schlittens über vorzugsweise einen Riemenantrieb in X-Y-Richtung bearbeitet wird, wobei vorzugsweise an einer externen Komponente, insbesondere einem Computer oder einem Steuergerät, eine Grafik und/oder ein Text über eine handelsübliche oder eigene Software erstellt wird, welche an die Steuereinheit des Laserplotters übertragen bzw. exportiert wird, die eine Konvertierung der übergebenen Daten, insbesondere der Grafik und/oder des Textes, zum Steuern der einzelnen Elemente der Lasermaschine bzw. des Laserplotters vornimmt. Dadurch wird erreicht, dass nach der Erkennung der Linse und/oder Düse eine Bearbeitung des Werkstückes möglich ist. Hierbei ist es möglich, dass automatisch beim Start eines Bearbeitungsprozesses automatisch zuerst die Linse und/oder Düse abgefragt wird oder dass zuerst manuell die Linse und/oder Düse abgefragt und anschließend der Bearbeitungsprozess gestartet wird.

Von Vorteil sind die Maßnahmen, bei denen eine Bildaufnahme eines Codes bzw. Beschriftung von der Kamera in annähernd senkrechter Richtung erfolgt, wobei die Linse bzw. Linsenhalterung und/oder Düse bzw. Düsenhalterung nach einem der Ansprüche 18 bis 25 ausgebildet ist. Dadurch wird erreicht, dass durch die spezielle Ausbildung der Linse bzw. der Linsenhalterung und/oder der Düse bzw. Düsenhalterung der Code bzw. die Beschriftung parallel zum Bearbeitungstisch auf die Oberseite der Gehäuseverlängerung aufgebracht werden kann, sodass die Kamera direkt, also annähernd senkrecht, eine Aufnahme des Codes bzw. der Beschriftung machen kann. Somit wird eine einfache Analyse im Analysetool ermöglicht.

Es sind die Maßnahmen von Vorteil, bei denen die Linse bzw. Linsenhalterung und/oder Düse bzw. Düsenhalterung mit einem Code in Form eines QR-Codes (33) oder Datamatrix Code, insbesondere Datamatrix Code ECC200, versehen wird. Dadurch wird erreicht, dass eine einfache Erkennung über eine Kamera ermöglicht wird. Hierzu kann aus dem Stand der Technik bekannte Software, insbesondere für das Analysetool, zum Auswerten und Erkennen eines QR-Codes eingesetzt werden.

Vorteilhaft sind die Maßnahmen, bei denen in dem Code, insbesondere QR-Code oder Datamatrix Code ECC200, weiter Informationen, wie die Abweichung vom idealen Fokuswert oder unterschiedliche Wellenlängen für unterschiedliche Fokuspunkte bzw. Brennweiten, hinterlegt werden. Dadurch wird erreicht, dass eine exakte Einstellung des Lasergerätes bzw. Laserplotters durch Auswertung des Codes ermöglicht wird. Hierdurch werden zu der Linsenart bzw. Linsentype noch weitere wichtige Informationen, die bei jeder Linse derselben Art bzw. Type unterschiedlich sein können, individual erfasst, d.h., dass beispielsweise zwei Linsen des Typs 2,5" unterschiedliche Abweichungen von idealen Fokuswert für 2,5" aufweisen, die über den Code an das Lasergerät bzw. der externen Komponente mitgeteilt werden können. Somit kann eine exakte Einstellung, insbesondere des Fokuspunktes bzw. der Brennweite, erreicht werden.

Weiters wird die Aufgabe der Erfindung durch einen Laserplotter zum Gravieren, Markieren und/oder Beschriften eines Werkstückes gelöst, bei dem die Kamera im Deckel des Gehäuses des Laserplotters angeordnet ist und sowohl in geschlossener als auch geöffneter Position des Deckels auslösbar ist, wobei zur Aufnahme eines Bildes der Fokussiereinheit und/oder eines Teilbereichs der Fokussiereinheit von der Kamera im Deckel diese in eine definierte Position verbracht bzw. positioniert ist, wobei ein Analysetool zum Auswerten der Linse und/oder Düse ausgebildet ist.

Vorteilhaft ist hierbei, dass automatisch eine Erkennung der verwendeten bzw. eingesetzten Linse und/oder Düse durchgeführt wird. Hierbei wird vorzugsweise nach der Erkennung der Linse und/oder Düse diese mit der in der Software hinterlegten Linse und/oder Düse verglichen und bei einer Abweichung ein Hinweis angezeigt. Es ist auch möglich, dass die abgefragte Linse und/oder Düse automatisch in die Software übernommen wird.

Es ist eine Ausbildung von Vorteil, bei der das Analysetool zur Auswertung von optischen Merkmalen, insbesondere der Farbe des Linsen- und/oder Düsengehäuses, eines Aufdrucks am Linsen- und/oder Düsengehäuse, der geometrische Form oder Oberflächenstruktur des Linsen- und/oder Düsengehäuses, ausgebildet ist. Dadurch wird erreicht, dass durch einfache Bildaufnahme der Fokussiereinheit die eingesetzten Linsen und/oder Düsen ausgewertet werden können.

Die Aufgabe der Erfindung wird aber auch durch eine Linsenhalterung zum automatischen Erkennen einer an einem Laserkopf bzw. Fokussiereinheit eines Laserplotters montierten Linse gelöst, bei der das Linsengehäuse eine Gehäuseverlängerung, die von der Gehäusekontur des Laserkopfes bzw. der Fokussiereinheit abweicht und vorsteht die von der Gehäusekontur des Laserkopfes bzw. der Fokussiereinheit abweicht und vorsteht, aufweist, auf die ein Code zur annähernd senkrechten Bildaufnahme einer Kamera angeordnet ist, wobei der Code bzw. die Beschriftung parallel zum Bearbeitungstisch auf einer Oberseite der Gehäuseverlängerung aufgebracht ist.

Weiters wird die Aufgabe der Erfindung aber auch durch eine Düsenhalterung zum automatischen Erkennen einer an einem Laserkopf bzw. Fokussiereinheit eines Laserplotters montierten Düse gelöst, bei der das Düsengehäuse eine Gehäuseverlängerung, von der Gehäusekontur des Laserkopfes bzw. der Fokussiereinheit abweicht und vorsteht, aufweist, auf die ein Code zur annähernd senkrechten Bildaufnahme einer Kamera angeordnet ist, wobei der Code bzw. die Beschriftung parallel zum Bearbeitungstisch auf einer Oberseite der Gehäuseverlängerung aufgebracht ist.

Vorteilhaft ist dabei, dass durch die Ausbildung der Gehäuseverlängerung einerseits ausreichend Platz für einen Code geschaffen wird und andererseits die Gehäuseverlängerung als Griff bei einem Linsentausch verwendet werden kann, da die Gehäuseverlängerung von der Gehäusekontur des Laserkopfes bzw. der Fokussiereinheit abweicht und vorsteht. Somit wird verhindert, dass der Nutzer beispielsweise mit seinen Fingern die eingesetzte Linse berührt, was gesundheitliche Risiken verursachen kann und weiters die Linse zerkratzen bzw. zerstören kann.

Es ist auch die Ausbildung von Vorteil, bei denen die Gehäuseverlängerung eine Vertiefung oder einen erhobenen Randbereich zum besseren Festhalten bei einem Linsentausch aufweist. Dadurch wird erreicht, dass damit der Nutzer mit seinen Fingerspitzen einen guten Halt erreicht.

Vorteilhaft ist eine Ausbildung, bei der der Code in Form eines QR-Codes oder Datamatrix Code, insbesondere Datamatrix Code ECC200, ausgebildet ist. Dadurch wird erreicht, dass damit mehr Informationen über die eingesetzte Linse durch den QR-Code oder Datamatrix Code, insbesondere Datamatrix Code ECC200, hinterlegt und ablesbar sind. Weiters wird ein einfacheres Ablesen des QR-Codes oder Datamatrix Code, insbesondere Datamatrix Code ECC200, durch eine Bildaufnahme von oben, die in etwa senkrecht ist, ermöglicht. Es ist erstmals aufgrund der Gehäuseverlängerung möglich, einen QR-Code oder Datamatrix Code, insbesondere Datamatrix Code ECC200, zur automatischen Erkennung und Abfrage der Linse und/oder Düse anzubringen.

Von Vorteil ist eine Ausbildung, bei der der QR-Code oder Datamatrix Code, insbesondere Datamatrix Code ECC200, innerhalb des erhobenen Randbereiches oder der Vertiefung aufgebracht ist. Dadurch wird erreicht, dass damit der angebrachte Code vor Zerkratzen geschützt ist.

Es ist eine Ausbildung von Vorteil, bei der in dem Code, insbesondere QR-Code oder Datamatrix Code ECC200, weiter Informationen, wie die Abweichung vom idealen Fokuswert oder unterschiedliche Wellenlängen für unterschiedliche Fokuspunkte bzw. Brennweiten, hinterlegt sind. Dadurch kann eine exakte Einstellung des Lasergerätes bzw. des Laserplotters für einen Bearbeitungsprozess erzielt werden.

Von Vorteil ist eine Ausbildung, bei der die Linsenhalterung und/oder die Düsenhalterung zur Anwendung bzw. Ausführung im Verfahren nach einem der Ansprüche 1 bis 13 und/oder zum Einsatz in einem Laserplotter nach einem der Ansprüche 14 oder 15 ausgebildet ist. Dadurch wird eine einfache Bildaufnahme vom auf der Oberseite angeordneten Code, die direkt bzw. annähernd senkrecht von der Kamera aufgenommen wird, ermöglicht.

Die Erfindung wird anschließend in Form eines Ausführungsbeispiels beschrieben, wobei darauf hingewiesen wird, dass die Erfindung nicht auf das dargestellten und beschriebenen Ausführungsbeispiel bzw. Lösung begrenzt ist.

Es zeigen:
- Fig.1: eine schaubildliche Darstellung einer Lasermaschine, insbesondere eines Laserplotters, zum Bearbeiten eines Werkstückes mit einem Kamerasystem am Deckel, in vereinfachter, schematischer Darstellung;
- Fig. 2: eine schaubildliche Darstellung der Lasermaschine, insbesondere des Laserplotters, gemäß Fig. 1, mit entsprechend positionierter Fokussiereinheit zum Erkennen der Linse und/oder Düse, in vereinfachter, schematischer Darstellung;
- Fig.3: eine schaubildliche Darstellung eines Ausführungsbeispiels einer Linsenaufnahme bzw. Linsenhalterung mit einer Gehäuseverlängerung, in vereinfachter, schematischer Darstellung;
- Fig.4: ein weiteres Ausführungsbeispiel einer Linsenaufnahme bzw. Linsenhalterung mit einer Gehäuseverlängerung, in vereinfachter, schematischer Darstellung;
- Fig.5: eine schaubildliche Darstellung eines Ausführungsbeispiels einer Linsenaufnahme bzw. Linsenhalterung mit einer Gehäuseverlängerung und erhobenen Randbereich, in vereinfachter, schematischer Darstellung;
- Fig.6: ein weiteres Ausführungsbeispiel einer Linsenaufnahme bzw. Linsenhalterung mit einer Gehäuseverlängerung und erhobenen Randbereich mit einem oben angeordneten Führungselement, in vereinfachter, schematischer Darstellung;
- Fig.7: eine schematische Darstellung einer Lasermaschine mit eingesetzten Linsenaufnahme mit einer Gehäuseverlängerung, in vereinfachter, schematischer Darstellung;
- Fig.8: eine annähernd senkrechte Bildaufnahme der Kamera bei geöffnetem Deckel mit einer Linsenaufnahme und Düsenaufnahme mit Gehäuseverlängerung, in vereinfachter, schematischer Darstellung;
- Fig.9: eine weitere annähernd senkrechte Bildaufnahme der Kamera mit geöffnetem Deckel mit einer Linsenaufnahme und Düsenaufnahme mit Gehäuseverlängerung, in vereinfachter, schematischer Darstellung;
- Fig.10: eine annähernd senkrechte Bildaufnahme der Kamera bei geschlossenem Deckel mit einer Linsenaufnahme und Düsenaufnahme mit Gehäuseverlängerung, in vereinfachter, schematischer Darstellung;
- Fig.11: eine vergrößerter Bildausschnitt nach Figur 10, in vereinfachter, schematischer Darstellung.

Einführend sei festgehalten, dass in den unterschiedlichen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die beschriebene Figur bezogen und sind bei einer Lageänderung sinngemäß auf die neue Lage zu übertragen.

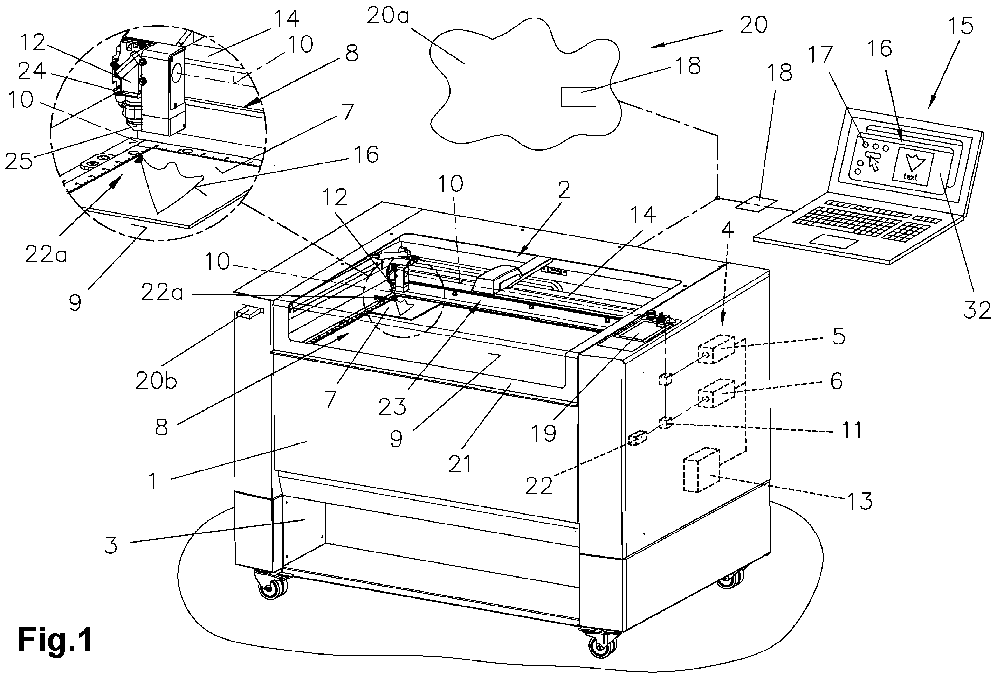

In den Fig. 1 bis 11## ist ein Ausführungsbeispiel für eine Lasermaschinen 1, insbesondere eines Laserplotters 1, gezeigt, in dem ein Kamerasystem 2 integriert ist.

Beim gezeigten Laserplotter 1 ist in einem Gehäuse 3 zumindest eine, vorzugsweise zwei, Strahlenquelle/n 4 bzw. Laserquellen 4 in Form von Lasern 5, 6 angeordnet. Die Laser 5 und 6 wirken vorzugsweise abwechselnd auf ein zu bearbeitendes Werkstück 7 ein. Das Werkstück 7 ist bzw. wird in einem Bearbeitungsraum 8 des Laserplotters 1, insbesondere auf einem Bearbeitungstisch 9 positioniert, wobei der Bearbeitungstisch 9 vorzugsweise in seiner Höhe verstellbar ist. Ein von einer Strahlenquelle 4, insbesondere dem Laser 5 oder 6, abgegebener Laserstrahl 10 wird über Umlenkelemente 11 an zumindest eine verfahrbare Fokussiereinheit 12 bzw. Laserkopf 12 gesendet, von der der Laserstrahl 10 in Richtung Werkstück 7 abgelenkt und zur Bearbeitung fokussiert wird. Die Steuerung, insbesondere die Positionssteuerung des Laserstrahls 10 zum Werkstück 7, erfolgt über eine in einer Steuereinheit 13 laufende Software, wobei das Werkstück 7 durch Verstellung eines Schlittens 14, an dem auch die Fokussiereinheit 12 bzw. der Laserkopf 12 verfahrbar angeordnet ist, über vorzugsweise einen Riemenantrieb in X-Y-Richtung bearbeitet wird. Hierbei ist es möglich, dass beispielsweise bei dem Bearbeitungsprozess "Gravur" die Verstellung des Schlittens 14 zeilenweise erfolgt, wogegen bei dem Bearbeitungsprozesse "Schneiden" der Schlitten 14 entsprechend der zu schneidenden Kontur verfahren wird, also nicht zeilenweise.

An einer externen Komponente 15, insbesondere einem Computer, Laptop oder einem Steuergerät, wird eine Grafik 16 und/oder ein Text 16 über eine handelsübliche Software 17, wie beispielsweise CorelDraw, Paint, usw., oder über die eigene Anwendungssoftware 17, insbesondere Ruby 17, erstellt bzw. geladen, welche an die Steuereinheit 13 der Lasermaschine bzw. des Laserplotters 1 in Form eines Jobs 18 exportiert bzw. übergeben wird. Vorzugsweise werden die zu übergebenden Daten von der gleichen oder einer anderen Software konvertiert, sodass die Steuereinheit 13 den Job 18 verarbeiten kann. Selbstverständlich ist es auch möglich, dass die Eingabe direkt am Laserplotter 1 über die vorhandenen Eingabemittel 19, wie beispielsweise einen Touchscreen 19 oder Eingabetasten, erfolgen kann oder ein entsprechender Job 18 von einem Speichermedium 20, wie beispielsweise einer Cloud 20a, einen USB-Stick 20b, usw., geladen wird. Nachdem die Daten, insbesondere der oder die Jobs 18, übertragen sind oder direkt erstellt bzw. vom Speichermedium 20 geladen wurden, wird von der Lasermaschine bzw. vom Laserplotter 1, insbesondere dessen Steuereinheit 13, der Job 18 abgearbeitet. Dabei ist es möglich, dass mehrere Jobs 18 gleichzeitig in der Lasermaschine 1, insbesondere dem Laserplotter 1, gespeichert und nacheinander abgearbeitet werden können.

Bei derartigen Lasermaschinen 1, insbesondere Laserplottern 1, ist es für die Sicherheit notwendig, dass zum Starten eines abzuarbeitenden Jobs 18, bei dem der Laserstrahl 10 auf das Werkstück 7 einwirkt, ein Deckel 21 bzw. Tür 21, der vorzugsweise zumindest teilweise transparent ausgebildet ist, geschlossen werden muss, wie dies in Fig. 1 dargestellt ist. Anschließend kann das Bedienerpersonal den Laserpunkt bzw. einen Laser-Pointer 22, insbesondere Laser-Pointer-Punkt 22a, der in den Strahlengang des Lasers 5, 6 eingekoppelt ist und über die Fokussiereinheit 12 in Richtung Bearbeitungstisch 8 abgelenkt wird, manuell oder auch automatisch am eingelegten Werkstück 7 positioniert, worauf der Job 18 für die Bearbeitung des Werkstückes 7 gestartet werden kann. Am Ende des Jobs 18 wird anschließend der Schlitten 14 und die Fokussiereinheit 12 bzw. Laserkopf 12 vorzugsweise in die Ausgangsposition verstellt, sodass das fertiggestellte Werkstück 7 entnommen werden kann, worauf ein neuer Bearbeitungsprozess durch Einlegen eines neuen zu bearbeitenden Werkstücks 7 bzw. eines Rohlings 7 gestartet werden kann. Hierbei ist es von Vorteil, wenn das Ende der Bearbeitung optisch oder akustisch angezeigt wird, sodass der Nutzer nicht ständig die Lasermaschine 1, insbesondere den Laserplotter 1, beobachten muss. Der Vollständigkeit halber wird erwähnt, dass die Verstellung der Fokussiereinheit 12 bzw. des Laserkopfes 12 mit aktiviertem Laser-Pointer 22 auch bei geöffneten Deckel 17 möglich ist, jedoch der Laser 5, 6 nicht aktiviert werden kann.

Weiters ist zumindest eine Kamera 23 im Kamerasystem 2 vorgesehen, wobei sich die Kamera 23 im Deckel 21, insbesondere zentral in der Mitte des Deckels 21, befindet. Die Kamera 23 ist zur Aufnahme des Bearbeitungsraums 8, insbesondere des Bearbeitungstischs 9, vorgesehen, sodass ein eingelegtes Werkstück 7 erkannt werden kann. Damit bei einem größeren Bearbeitungsraum 8 mit einer Kamera 23 das Auslangen gefunden werden kann, weist die eingesetzte Kamera 23 vorzugsweise eine Fischaugenoptik auf, wobei bei der erstmaligen Nutzung der Kamera 23 eine Kalibrierung zum Entzerren des aufgenommenen Bearbeitungsraums 8 durchgeführt werden muss. Es ist aber auch möglich, dass zwei oder mehrere Kameras 23 im Deckel 21 angeordnet werden, um den gesamten Bearbeitungstisch 9 erfassen zu können, wobei hierzu wiederum vorzugsweise Fischaugenoptiken oder normale Optiken eingesetzt werden können. Mit der Kamera 23 wird beispielsweise die Position des eingelegte Werkstücks 7 erfasst und vorzugsweise an der externen Komponente 15, insbesondere dem Laptop, angezeigt. Die Erfassung der Position des Werkstückes 7 erfolgt dabei vorzugweise vor der Bearbeitung bzw. dem Start des Bearbeitungsprozesses, sodass die Fokussiereinheit 12 bzw. der Laserkopf 12 über den Laser-Pointer 22 entsprechend positioniert werden kann. Der Vollständigkeit halber wird darauf hingewiesen, dass die Erkennung der Position des Werkstücks 7 auch bei geöffneten Deckel 21 möglich ist.

Bei dem neuartigen Laserplotter 1 bzw. der Lasermaschine 1 ist nunmehr vorgesehen, dass die Lasermaschine 1 bzw. der Laserplotter 1 ein Verfahren zum Erkennen einer Linse 24 und/oder Düse 25 an der Fokussiereinheit 12 des Laserplotters 1 zum Schneiden, Gravieren, Markieren und/oder Beschriften des Werkstückes 7 durchführt bzw. der Laserplotter 1 dazu ausgebildet ist.

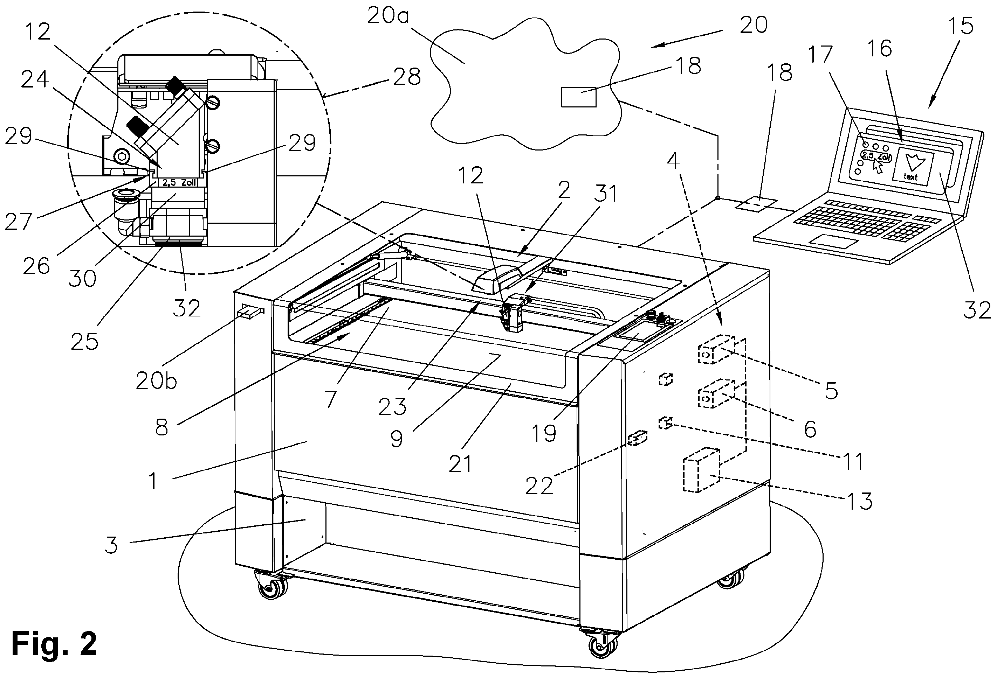

Dabei ist die Fokussiereinheit 12 bzw. der Laserkopf 12 derart ausgebildet, dass von außen ein Linsengehäuse 26 der Linse 24 in eine Linsenaufnahme 27 eingesetzt oder entnommen werden kann, wie diese auf einen von der Kamera 23 aufgenommenen Bild 28 der Fokussiereinheit 12 in Fig. 2 ersichtlich ist. Vorzugsweise sind hierzu an den Seiten des Linsengehäuses 26 Führungen 29 vorgesehen, um die Linse 24 richtig in die Fokussiereinheit 12 einsetzen zu können. Damit jedoch eine Linse 24 getauscht werden kann, muss zuerst ein Befestigungsrad 30 gelöst werden, sodass anschließend die Linse 24 entnommen werden kann. Hierzu wird das Befestigungsrad 30 vorzugsweise nach unten gedreht, sodass das Befestigungsrad 30 die Klemmung der Linse 24 löst und die Linse 24, insbesondere das Linsengehäuse 26, von der Linsenaufnahme 27 herausgezogen werden kann. Um eine Linse 24 anschließend wieder einzusetzen, wird die Linse 24 zuerst in die Linsenaufnahme 27 eingesetzt bzw. eingeschoben und anschließend mit dem Befestigungsrad 30 durch Drehen vorzugsweise nach oben fixiert bzw. eingeklemmt, sodass die Linse 24 sicher an der Fokussiereinheit 12 befestigt ist. Das Linsengehäuse 26 ist derart ausgebildet, dass dieses zumindest an einer Seite optische oder farbliche Merkmale, wie die Farbe des Linsengehäuses 26 oder einen Aufdruck am Linsengehäuse 26 oder eine Beschriftung oder Gravur am Linsengehäuse 26 oder eine spezifische geometrische Form oder Oberflächenstruktur des Linsengehäuses 26, aufweist, um eine eindeutige Kennung der eingesetzten Linse 24 zu ermöglichen.

Ebenso ist die Düse 25 von der Fokussiereinheit 12 abnehmbar und kann somit getauscht werden. Dies erfolgt einfach durch Drehen der Düse 25. Auch hier ist vorgesehen, dass die Düsen 25 mit optischen oder farblichen Merkmalen, wie die Farbe des Düsengehäuses 32 oder einen Aufdruck am Düsengehäuse 32 oder eine Beschriftung oder Gravur am Düsengehäuse 32 oder eine spezifische geometrische Form oder Oberflächenstruktur des Düsengehäuses 32, gekennzeichnet ist.

Um jedoch eine hohe Bedienerfreundlichkeit zu erreichen, ist bei dem erfindungsgemäßen Laserplotter 1 vorgesehen, dass eine automatische Erkennung der gerade eingesetzten oder vorhandenen Linse 24 und/oder Düse 25 möglich ist.

Hierzu wird nach Aktivierung der Erkennung der Linsen 24 und/oder Düsen 25 oder automatisch vor dem Start eines Bearbeitungsprozesses ein sogenannter Erkennungsprozess gestartet, wozu die Strahlenquelle 4 deaktiviert wird und die Fokussiereinheit 12 bzw. der Laserkopf 12 auf eine bestimmte Position 31, die möglichst nahe an der Kamera 23 ist, verfahren wird, wie dies in Fig. 2 dargestellt ist. Dabei ist die Position 31 in der internen Software der Steuereinheit 13 und/oder externen Software 17 der Komponente 15 hinterlegt bzw. gespeichert, sodass nach jedem Aufruf immer die gleiche Position 31 angefahren wird. Anschließend wird mit der Kamera 23 ein Bild 28 von der Fokussiereinheit 12 bzw. Laserkopf 12 aufgenommen, wie dies schematisch in Fig. 2 gezeigt ist. Das aufgenommene Bild 28 wird anschließend direkt von der Software im Laserplotter 1 oder von der Software 17 auf der angeschlossenen Komponente, insbesondere am Laptop, ausgewertet, d.h., dass von der Software bzw. einem Analysetool der Software die Linse 24 und/oder Düse 25, insbesondere die Positionen der Linse 24 und/oder Düse 25, erkannt wird, worauf die optischen bzw. farblichen Merkmale, die an der Linse 24 und/oder Düse 25 angebracht sind bzw. entsprechend denen die Linse 24 und/oder Düse 25 ausgebildete ist, ausgewertet werden. Das Analysetool ist in der Software der Lasersteuerung oder Konvertierung bzw. Erstellung des Jobs 18 integriert und hat die Aufgabe das aufgenommen Bild 28 auszuwerten oder das Analysetool ist in der angeschlossenen externen Komponente 15, insbesondere Laptop, integriert und das aufgenommene Bild 28 wird zur Analyse an die externe Komponente 15, insbesondere Laptop, gesendet. Hierbei ist es möglich, dass direkt am Linsengehäuse 26 der Wert der Linse 24, beispielsweise 2,0" Zoll, erfasst und angezeigt wird oder dass das Linsengehäuse 26 eine bestimmte Farbe aufweist, sodass anschließend der zu dieser Farbe hinterlegte Wert angezeigt wird.

Bevorzugt wird die erkannte Linse 24 und/oder Düse 25 mit der in der Steuereinheit 13 oder der Software 17 eingestellten Linse 24 und/oder Düse 25 vergleichen. Hierbei wird eine Meldung bzw. Warnung ausgegeben, wenn sich die erkannte Linse 24 und/oder Düse 25 von der eingestellten Linse 24 und/oder Düse 25 unterscheidet, wobei vorzugsweise abgefragt wird, ob die neu erkannte Linse 24 und/oder Düse 25 übernommen werden soll oder nicht. Wird hierbei "nicht übernehmen" ausgewählt, so wird vorzugsweise vor dem Start des nächsten Bearbeitungsprozess nochmals eine Überprüfung durchgeführt, um feststellen zu können, ob die richtige Linse 24 und/oder Düse 25 eingesetzt wurde. Hierbei wird als vorteilhafte Lösung festgehalten, dass die Überprüfung der Linse 24 und/oder Düse 25 nach dem Start des Bearbeitungsprozesses und vor dem Aktivieren der Strahlenquelle 4 vorgenommen wird. Es ist aber auch möglich, dass die erkannte Linse 24 und/oder Düse 25 von der Steuereinheit 13 oder Software 17 einfach immer übernommen wird.

Durch das automatische Erkennen der Linse 24 und/oder Düse 25 ist es möglich, dass weiter Parameter automatisch geladen werden können, d.h., dass zu den Linsen 24 und/oder Düsen 25 Kriterien oder Vorgabewerte in einer Datenbank hinterlegt sind. Beispielsweise wird bei einem Tausch der Linse 24 von 2,0" Zoll auf eine Linse 24 von 3,0" Zoll die Brennweite verändert, sodass dadurch eine neue Bearbeitungstischhöhe erforderlich ist, die von einer hinterlegten Datenbank geladen wird, sodass bei einem Start des Bearbeitungsprozesses eine neue Bearbeitungstischhöhe verwendet wird. Somit ist es von Vorteil, wenn bei einem Start eines Bearbeitungsprozesses zuerst die Erkennung der Linse 24 und/oder Düse 25 durchgeführt wird, um die einzelnen Parameter mit der eingesetzten Linse 24 und/oder Düse 25 zu vergleichen und gegebenenfalls ändern zu können bzw. den Bearbeitungsprozess zu unterbrechen.

Grundsätzlich kann die Erkennung der Linse 24 und/oder Düse 25 manuell, insbesondere bei der Inbetriebnahme des Laserplotters 1, durchgeführt werden, sodass anschließend mehrere Bearbeitungsprozesse abgearbeitet werden können. Hierbei ist es von Vorteil, wenn ein Tausch der Linse 24 und/oder Düse 25, also die Position in der Fokussiereinheit 12 bzw. Laserkopf 12, elektrisch bzw. elektronisch überwacht wird, sodass bei Aktivierung eines Tausches vor dem nächsten Bearbeitungsprozess automatisch eine Erkennung der Linse 24 und/oder Düse 25 erfolgt, wenn nicht zuvor manuell eine Erkennung gestartet wurde. Genauso kann der Erkennungsprozess bei Abarbeitung des Jobs 18 erfolgen bzw. gestartet werden, wodurch in Abhängigkeit zum konkreten Gravier-, Markier- oder Schneide-Auftrag bzw. Job 18 überprüft werden kann, ob die korrekte bzw. passende Linse 24 und/oder Düse 25, insbesondere in Bezug auf das zu bearbeitende Material oder den Fokusabstand usw., eingesetzt ist.

Bevorzugt werden die Einstellungen und Kriterien, unter denen ein Job 18 abgearbeitet wird, gespeichert, insbesondere in einer externen Komponente 15 und/oder Cloud 20a, wodurch Fehlerquellen oder Störungen erkannt und/oder nachträglich analysiert werden können. Beispielsweise kann so auch über Fernwartung überprüft werden, ob originale Linsen 24 und/oder Düsen 25 verwendet werden. Dies ist insbesondere für die Störungsanalyse bedeutend und kann auch für die Abwicklung von Garantie- und Gewährleistungsfällen wesentliche Informationen liefern.

Von Vorteil ist, wenn von der Kamera 23 ein Referenzbild der Fokussiereinheit 12 aufgenommen und in einer Datenbank hinterlegt wird. Die Datenbank ist dabei bevorzugt auf der Komponente 15 und/oder einem sonstigen externen Speichermedium 20, insbesondere der Cloud 20a, gespeichert und vorzugsweise auch für Fernzugriffe, z.B.: durch ein Fernwartungsteam, ausgebildet bzw. eingerichtet. Genauso kann die Datenbank aber auch intern in der Software 17 der Steuereinheit 13 gespeichert oder angeordnet sein. Dabei wird am Referenzbild die Position der Linse 24 und/oder Düse 25 festgelegt und ein neu aufgenommenes Bild 28 an dieser Position ausgewertet. Dadurch wird der Erkennungsvorgang wesentlich beschleunigt.

Auch ist es möglich, dass von der Kamera 23 mehrere Bilder 28 der Fokussiereinheit 12 bzw. der Linse 24 und/oder Düse 25 auf derselben oder auch unterschiedlichen Positionen der Fokussiereinheit 12 bzw. Laserkopfes 12 aufgenommen werden. Damit wird sichergestellt, dass zumindest ein auswertbares Bild 28 aufgenommen wurde, um die Linse 24 und Düse 25 erkennen zu können. Hierbei ist es möglich, dass auch die Tischhöhe zur Aufnahme eines oder mehrerer Bildes 28 angepasst wird.

Weiters ist es auch möglich, dass zum Wechseln der Linse 24 und/oder Düse 25 eine bestimmte Position mit der Fokussiereinheit 12 bzw. Laserkopf 12 angefahren wird. Hierzu wird dazu in der Software ein Menü oder Button oder am Laserplotter 1 ein Button aktiviert, sodass anschießend die Fokussiereinheit 12 bzw. Laserkopf 12 auf die Wechselposition verfahren wird.

Wesentlich bei der erfindungsgemäßen Lösung ist, dass zum Ermitteln der Linse 24 und/oder Düse 25 die Fokussiereinheit 12 auf eine definierte Position 31, bei der die Linse 24 und/oder Düse 25 für die Kamera 23 gut sichtbar ist, verstellt wird, worauf über die Kamera 23 zumindest ein Bild 28 der Fokussiereinheit 12 aufgenommen wird und über ein Analysetool die Linse 24 und/oder Düse 25 am Bild 28 erkannt wird.

Vorzugsweise wird die Fokussiereinheit 12 zum Erzeugen eines gut sichtbaren Bildes 28 in den Nahbereich der Kamera 23, insbesondere in kurzer Distanz zur Kamera 23, verstellt, wobei vorzugsweise der Bearbeitungstisch 9 ebenfalls auf eine bestimmte Höhe eingestellt wird. Hierbei wird die Fokussiereinheit 12 bzw. Laserkopf 12 in einem geringen Abstand zur Kamera 23 positioniert, bei dem der Bildwinkel der Kamera 23 die Aufnahme der Fokussiereinheit 12 bzw. Laserkopfes 12 oder Teile daraus, insbesondere der Linse 24 und/oder Düse 25, mit einer guten Qualität ermöglicht, sodass die eingesetzte Linse 24 und/oder Düse 25 von der Software, insbesondere dem integrierten Analysetool, ausgewertet werden kann.

Bei dem gezeigten Ausführungsbeispiel der Fig. 1 und 2 wird eine sogenannte annähernd waagrechte Bildaufnahme der Kamera 23 von der Linse 24 und/oder Düse 25 aufgenommen. Annähernd waagrecht deshalb, da ein Code oder Beschriftung 33 bzw. Kennzeichnung der Linse und/oder Düse 24, 25 seitlich am Linsengehäuse 26 oder Düsengehäuse 32 angebracht sind und somit annähernd 90° zum Bearbeitungstisch 9 bzw. 90° zur Kamera 23 ausgebildet sind, sodass bei einer Bildaufnahme des Bildes 28 eine annähernd waagrechte Ausrichtung entsteht.

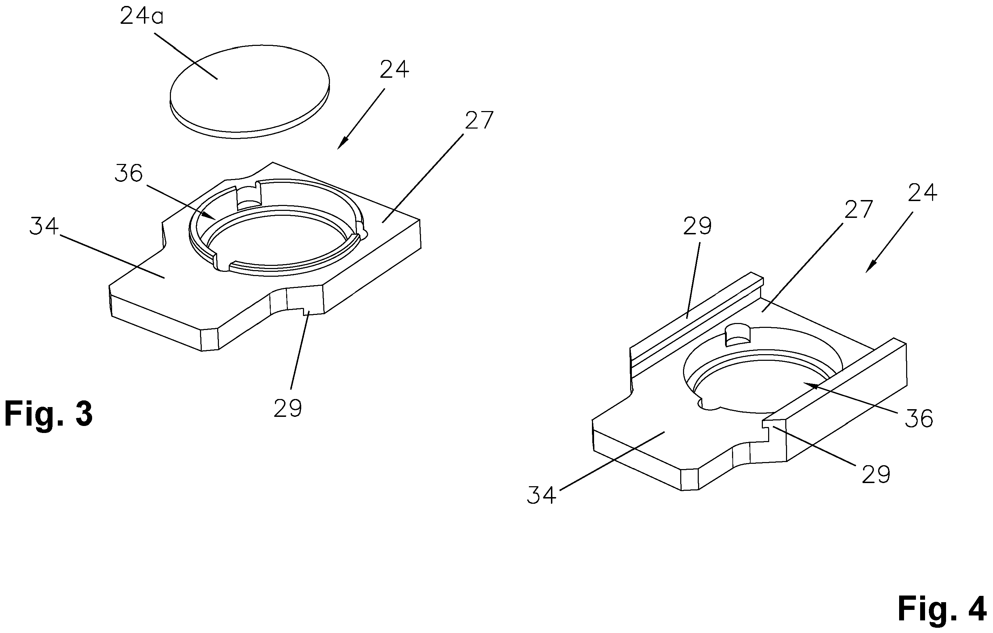

In den Figuren 3 bis 11 sind nun Ausbildungen bzw. Ausführungsbespiele gezeigt, bei denen eine annähernd senkrechte Bildaufnahme eines Codes 33 oder Beschriftung 33 der Linse 24 und/oder Düse 25 ermöglicht wird, d.h., dass der Code 33 oder die Beschriftung 33 nicht mehr seitlich am Linsengehäuse 26 oder Düsengehäuse 32 angeordnet bzw. aufgebracht ist, sondern das Linsengehäuse 26 eine Gehäuseverlängerung 34 und/oder das Düsengehäuse 32 eine Gehäuseverlängerung 35 aufweist, auf die der Code 33 bzw. die Beschriftung 33 aufgebracht sind. Der Code 33 bzw. die Beschriftung 33 wird nunmehr nicht seitlich auf die Linse 24 bzw. Düse 25 aufgebracht, sondern auf eine Oberfläche bzw. Oberseite der Gehäuseverlängerungen 34, 35. Damit ist der Code 33 bzw. die Beschriftung parallel zum Bearbeitungstisch 9 ausgerichtet, sodass eine annähernd senkrechte Bildaufnahme von der Kamera 23 bei geöffneten oder geschlossenen Deckel 21 ermöglicht wird.

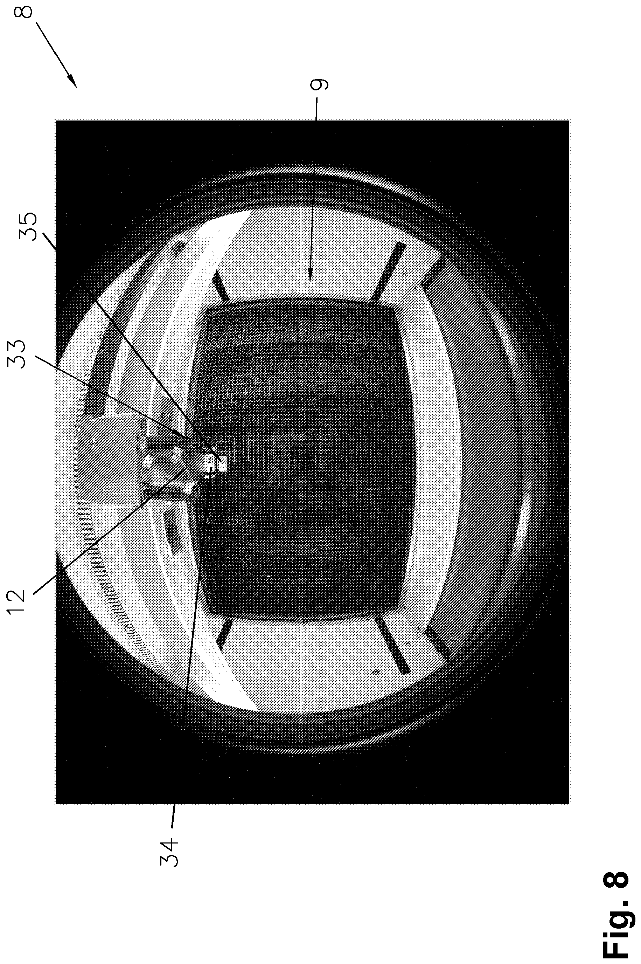

In Figur 3 ist hierzu Linsenhalterung bzw. eine Linse 24 mit einem Linsengehäuse 27 und der Gehäuseverlängerung 34 gezeigt. Das Linsengehäuse 27 weist hierbei auf der Unterseite Führungen 29 bzw. Führungsvorsprünge 29 auf. Weiters ist ein optische Linse 24a dargestellt, die im zusammengebauten Zustand in einer Aufnahme 36 des Linsengehäuse 27 befestigt, insbesondere geklebt, ist. Durch die Vergrößerung des Linsengehäuses 17 mit der Gehäuseverlängerung 34, die aus den Laserkopf 12 vorspringt, ist es nunmehr möglich, auf die Oberfläche der Gehäuseverlängerung 34 einen Code 33, insbesondere QR-Code 33 oder Datamatrix Code ECC200, und/oder Beschriftung 33, wie in den Figuren 8 bis 11 ersichtlich, aufzubringen, da erheblich mehr Platz zur Verfügung steht. In Figur 4 ist eine ähnlich aufgebaute Linse 24 gezeigt, bei der nunmehr die Führungen 29 auf der Oberseite des Linsengehäuses 27 angeordnet sind. Auf die Darstellung der Linse 24a wurde der Übersichtlichkeit halber verzichtet.

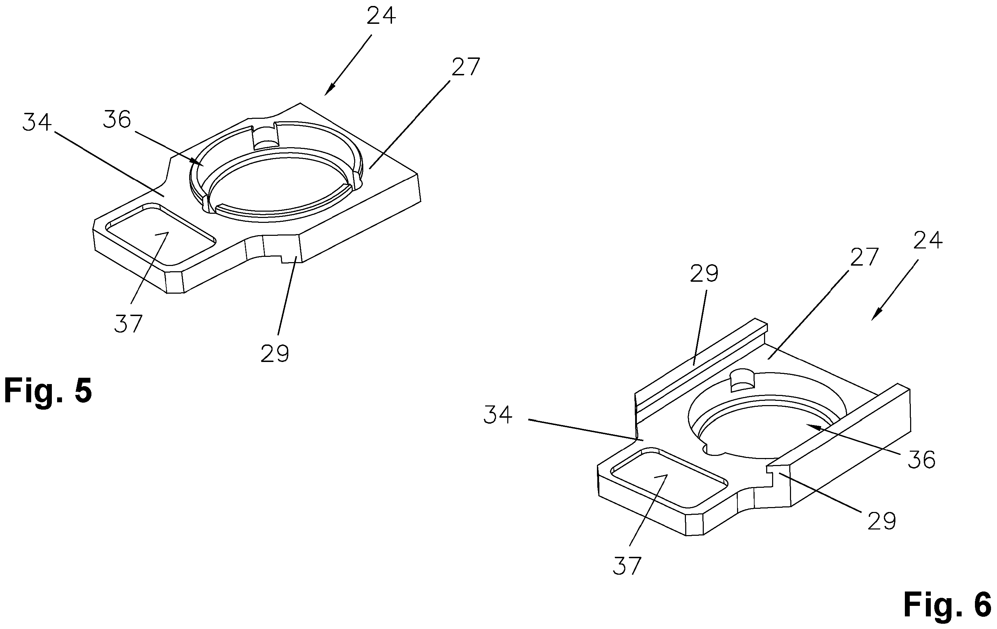

In den Figuren 5 und 6 sind ähnliche Ausführungsbeispiele der Linsenhalterung bzw. Linse 24 gezeigt. Der Unterschied liegt daran, dass die Gehäuseverlängerung 34 speziell ausgebildet sind. Hierbei weist die Gehäuseverlängerung 34 eine Vertiefung 37 oder einen erhobenen Randbereich zum besseren Festhalten bei einem Linsentausch auf. Auf die Darstellung der Linse 24a wurde der Übersichtlichkeit halber auch bei diesen Figuren 5 und 6 verzichtet.

Auf eine spezielle Darstellung der Gehäuseverlängerung 35 des Düsengehäuses 32 der Düsenhalterung bzw. Düse 25 wurde verzichtet, wobei ein Ausführungsbeispiel aus den Figuren 8 bis 11 ersichtlich ist. Im Wesentlichen ist hierzu zu erwähnen, dass die Gehäuseverlängerung 35 für die Düse 25 nunmehr vorzugsweise als weiters Element ausgebildet ist, dass derart an der Düse 25 befestigt, ist bzw. die Düse 25 aufnimmt, dass der aufgebrachte Code 33 oder die Beschriftung 33 bei montierter Düse 25 am Laserkopf 12 gleich den aufgebrachten Code 33 der Linse 24 ausgerichtet bzw. angeordnet ist, also parallel zum Bearbeitungstisch 9, wie dies in den Figuren 8 bis 11 ersichtlich ist.

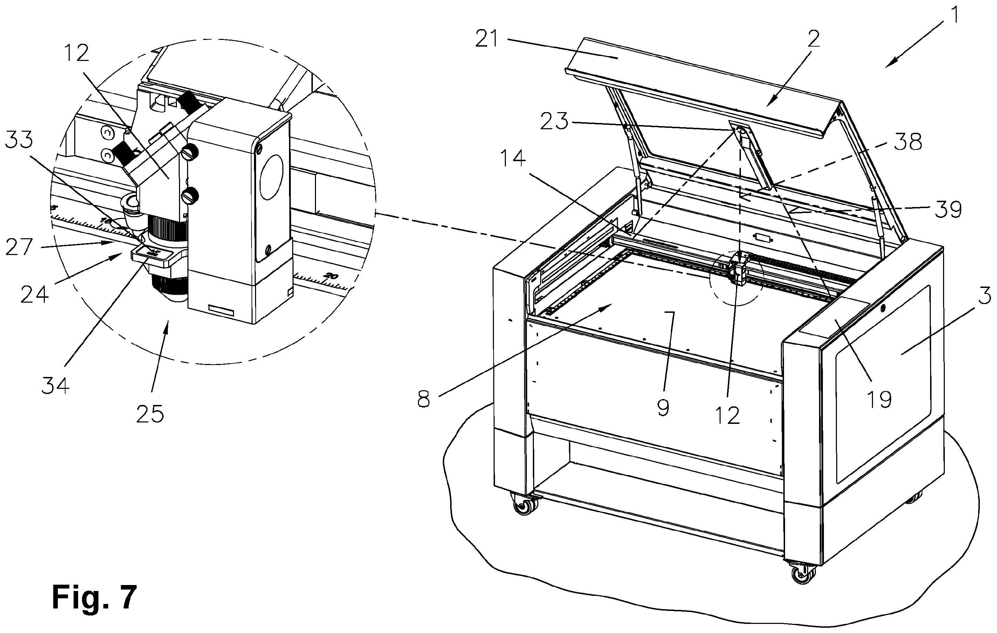

In Figure 7 ist ein Einsatz bzw. eine Anwendung einer Linsenhalterung bzw. Linse 24 ohne einer Düsenhalterung bzw. Düse 25 gezeigt. Dabei ist ersichtlich, dass die Gehäuseverlängerung 34 der Linse 24 außerhalb der Bauteile bzw. Elemente des Laserkopfes 12 bzw. der Fokussieeinheit 12 angeordnet ist und somit vorragt. Somit kann einerseits bei einem Tausch der Linse 24 diese über die Gehäuseverlängerung 34 gut gehalten werden und andererseits wird eine störungsfreie Sicht auf die Oberseite der Gehäuseverlängerung 34 von oben, also der Position der Kamera 23, ermöglicht. Die Kamera 23 kann damit bei geschlossenen oder geöffneten Deckel 21 eine annähernd senkrechte Bildaufnahme, gemäß Pfeil 38, auf die Oberseite der vorstehenden Gehäuseverlängerung 34 machen, sodass der auf der Oberseite aufgebrachte Code 33 oder Beschriftung 33 gut erfasst und vom Analysetool problemlos ausgewertet werden kann. Vorteilhaft ist hierbei, wenn der Laserkopf 12 bzw. die Fokussiereinheit 12 eine Position 31 einnimmt, bei der der Aufnahmebereich 39, wie strich punktiert in Fig. 7 dargestellt, der Kamera 23 eine leicht versetzte annähernd senkrechte Bildaufnahme ausführen kann.

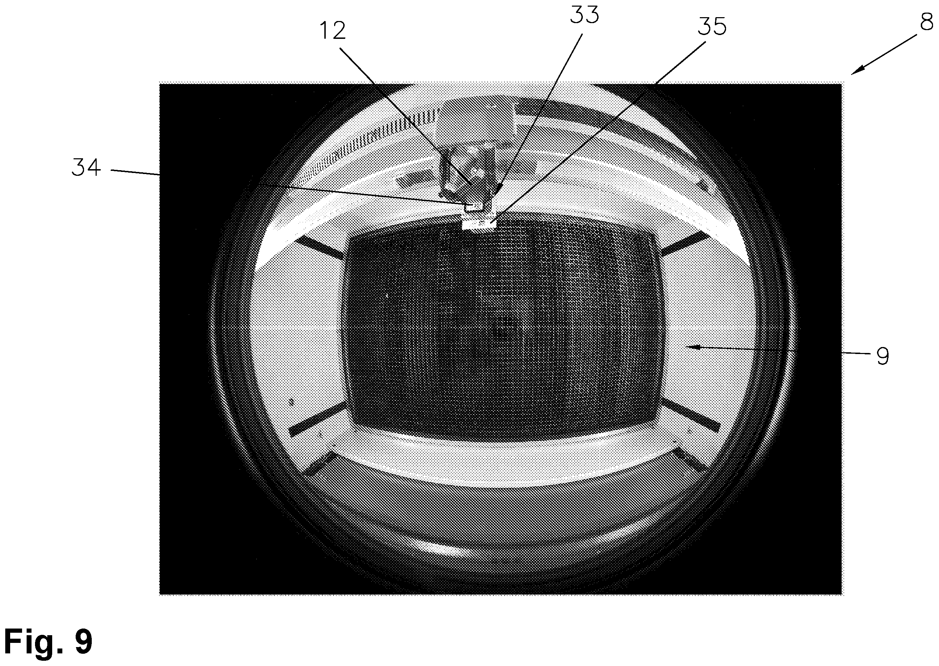

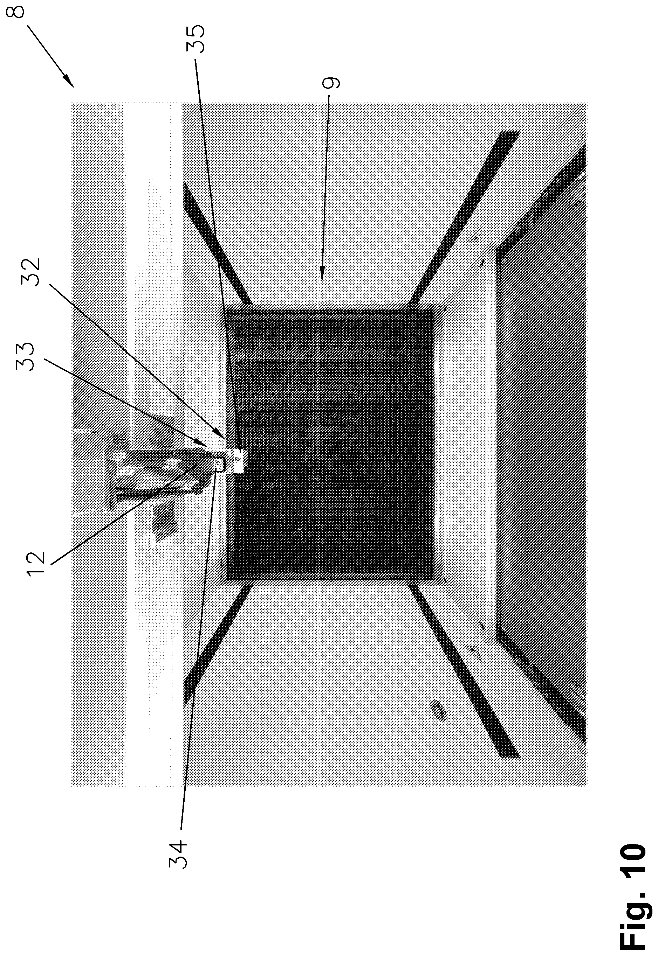

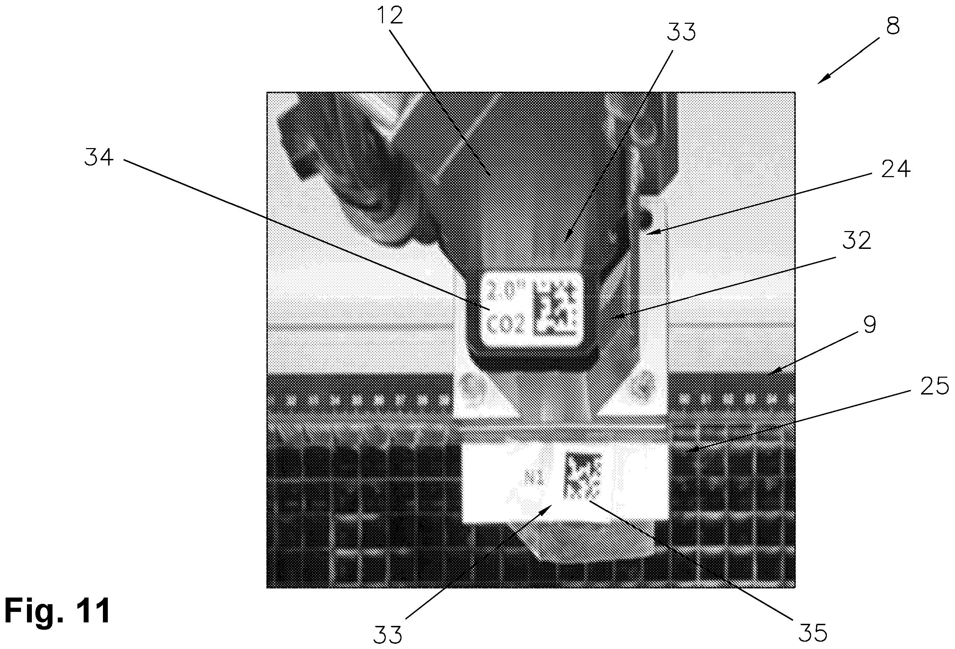

Weiters sind in den Figuren 8 bis 11 Bildaufnahmen der Kamera 23 gezeigt, wobei die Bilder 28 der Figuren 8 und 9 mit geöffneten Deckel 21 und das Bild 28 der Figur 10 bei geschlossenen Deckel 21 aufgenommen wurden. Die Figur 11 zeigt eine Vergrößerung des Laserkopfes 12 bzw. der Fokussiereinheit 12 von der Figur 10, wobei daraus die annähernd senkrechte Bildaufnahme des Codes 33 bzw. Beschriftung 33 auf den Gehäuseverlängerungen 34,35 der Linse 24 und Düse 25 gut sichtbar ist. Bei den Bilder 28 der Figuren 8 und 9 sind zwei unterschiedliche Positionen 31 des Laserkopfes 12 bzw. der Fokussiereinheit 12 gezeigt, sodass ersichtlich ist, dass auch unterschiedliche Positionen 31 für die Erkennung der Linse 24 und/oder Düse 25 möglich sind.

Es ist vorteilhaft, wenn der Code 33 als QR-Code 33 oder Datamatrix Code 33, insbesondere Datamatrix Code ECC200, gegebenenfalls mit weiteren Informationen ausgebildet ist, da damit eine Vielzahl von Daten hinterlegt sein können. Beispielsweise kann im Code 33 der Linse 24 auch die Abweichung vom idealen Fokuswert abgespeichert sein, d.h., dass beispielsweise eine 1.5" Linse 24 in Wirklichkeit nicht den Fokus von 1.5", sondern z.B. ein Korrekturwert 1.51" aufweist, sodass die
0.01" Abweichung als Wert bzw. Korrekturwert im Datamatrix Code 33 hinterlegen wird und somit eine optimale Tischeinstellung für den Fokuspunkt vorgenommen werden kann. Dadurch wird erreicht, dass ein Kunde eine justierte Linse 24 kauft, wobei über den Code 33 oder Beschriftung 33 die exakten Einstellungen für diese Linse 25 entnommen werden kann. Weiters wäre es auch möglich, dass im Code 33 die Zusatzinformationen des Linsenfokuswertes für jede Wellenlänge hinterlegt ist, d.h., dass bei unterschiedlichen Lasern 5 oder 6 aufgrund der unterschiedlichen Wellenlängen auch unterschiedliche Fokuspunkte vorhanden sind, was über den Code 33 vor dem Start eines Bearbeitungsprozess beispielsweise abgefragt werden kann. Hierbei kann auch eine automatische Tischhöhenanpassung für die Einstellung des optimale Fokuspunkt durchgeführt werden. Grundsätzlich kann gesagt werden, dass Korrekturwerte und/oder Informationen bzw. Daten der Linse 24 und/oder Düse 25 im Code 33 und/oder Beschriftung 33 hinterlegt und abgefragt werden können.

Üblicherweise wird vor jedem Start eines Bearbeitungsprozess manuell die Linse 24 und/oder Düse 25 eingestellt. Hierbei wird vom Nutzer auch manuell ein Tausch der Linse 24 und/oder Düse 25 vorgenommen, wobei der Nutzer zuvor oder danach die entsprechende Linse 24 und/oder Düse 25 einstellt oder erfindungsgemäß automatisch durch eine Linse- und/oder Düsenerkennung einstellen lassen kann. Weiters ist es möglich, dass vor jedem Start des Bearbeitungsprozess eine Linsen- und/oder Düsenerkennung, die manuell oder automatisch durch Aktivieren in der Software gestartet wird, durchgeführt werden, in dem zur Linsenerkennung und/oder Düsenerkennung die Fokussiereinheit 12 bzw. der Laserkopf 12 derart positioniert ist, dass von der Kamera 23, die, vorzugsweise zentral, im Deckel 21 positioniert ist, ein annähernd senkrechtes Bild 28 des Codes 33 oder Beschriftung 33 von der Linsenhalterung bzw. Linse 24 und/oder Düsenhalterung bzw. Düse 25, insbesondere der Gehäuseverlängerung 34,35 der Linse 24 und/oder Düse 25, erstellt bzw. aufnimmt. Anschließend wird das Bild 28 an das Analysetool, das auf der Steuereinheit 13 der Lasermaschine 1 oder an der externen Komponente, insbesondere am Laptop, läuft, übermittelt.

Es ist auch möglich, dass nach einem manuellen Tausch der Linse 24 oder Düse 25 eine automatische Linsen- und/oder Düsenerkennung durchgeführt wird, d.h., dass eine automatische Erkennung eines Linsenwechsels oder Düsenwechsel vorhanden ist, sodass zumindest vor dem nächsten Bearbeitungsprozess oder gleich nach dem Tausch eine Linsen- und/oder Düsenerkennung gestartet wird. Die automatische Erkennung eines Wechsels kann durch elektrische oder magnetische oder optische Erkennungssysteme überwacht werden. Dadurch kann beispielsweise erkannt werden, ob eine Linse 24 herausgenommen und/oder reingeben bzw. eingesetzt wurde, sodass ein automatischer Erkennungsprozess gestartet werden kann.

Die Definition annähernd senkrecht wurde deshalb gewählt, da der Laserkopf 12 bzw. die Fokussiereinheit 12 nicht direkt unterhalb der Kamera 23, also senkrecht oder direkt, positioniert sein kann, sondern eine gewisse Versetzung bzw. Winkel notwendig ist, um eine optimale Bildaufnahme des Codes 33 bzw. QR-Codes 33 oder Datamatrix Code 33, insbesondere Datamatrix Code ECC200, von der Oberseite der Gehäuseverlängerung 34,35 der Linsenhalterung bzw. Linse 24 und/oder Düsenhalterung bzw. Düse 25 zu erreichen. Alternativ kann auch gesagt werde, dass eine "Top-Shot"-Aufsicht von der Kamera 23 auf den Code 33 bzw. die Oberseite der Gehäuseverlängerungen 34,35 der Linse 24 und/oder Düse 25 erfolgt, die aufgrund des Laserkopfes 12 bzw. Fokussiereinheit 12 leicht versetzt ist.

Der Ordnung halber wird darauf hingewiesen, dass die Erfindung nicht auf die dargestellten Ausführungsvarianten beschränkt ist, sondern auch weitere Ausbildungen und Aufbauten beinhalten kann, die in den Schutzumfang der Ansprüche fallen.

## Patentansprüche

1. Verfahren zum Erkennen einer Linse (24) und/oder Düse (25) an einer Fokussiereinheit (12) eines Laserplotters (1) zum Schneiden, Gravieren, Markieren und/oder Beschriften eines Werkstückes (7), bei dem in einem Gehäuse (3) des Laserplotters (1) zumindest eine Strahlenquelle (4) in Form eines Lasers (5,6) eingesetzt wird, wobei bei aktivierter Strahlenquelle (4) ein Laserstrahl (10) über Umlenkelemente (11) zu einer Fokussiereinheit (12) bzw. Laserkopf (12) gelenkt wird und ein Bearbeitungstisch (9) bzw. Bearbeitungsraum (8) über zumindest eine Kamera (23) erfasst wird, **dadurch gekennzeichnet, dass** die Kamera (23) im Deckel (21) des Gehäuses (3) des Laserplotters (1) angeordnet wird und sowohl in geschlossener als auch geöffneter Position des Deckels (21) auslösbar ist, wobei zum Ermitteln der Linse (24) und/oder Düse (25) die Fokussiereinheit (12) bzw. Laserkopf (12) auf eine definierte Position (31), bei der die Linse (24) und/oder Düse (25) für die Kamera (23) im Deckel (21) gut sichtbar ist, verstellt wird, worauf über die Kamera (23) im Deckel (21) ein Bild (28) der Fokussiereinheit (12) bzw. Laserkopf (12) aufgenommen wird und über ein Analysetool die Linse (24) und/oder Düse (25) am Bild (28) erkannt wird.

2. Verfahren nach Anspruch 1, **dadurch gekennzeichnet, dass** die Erkennung der Linse (24) über optische Merkmale, wie die Farbe eines Linsengehäuses (26) oder einen Aufdruck am Linsengehäuse (26) oder eine Beschriftung (33) oder Gravur am Linsengehäuse (26) oder die geometrische Form oder Oberflächenstruktur des Linsengehäuses (26), erfolgt.

3. Verfahren nach Anspruch 1 oder 2, **dadurch gekennzeichnet, dass** die Erkennung der Düse (25) über optische Merkmale, wie die Farbe des Düsengehäuses (32) oder einen Aufdruck am Düsengehäuse (32) oder eine Beschriftung (33) oder Gravur am Düsengehäuse (32) oder die geometrische Form oder Oberflächenstruktur des Düsengehäuses (32), erfolgt.

4. Verfahren nach einem der vorhergehenden Ansprüche, **dadurch gekennzeichnet, dass** zu den Linsen (24) und/oder Düsen (25) Kriterien oder Vorgabewerte in einer Datenbank hinterlegt werden.

5. Verfahren nach einem der vorhergehenden Ansprüche, **dadurch gekennzeichnet, dass** die erkannte Linse (24) und/oder Düse (25) mit der in der Steuereinheit (13) oder einer Software (17) eingestellten Linse (24) und/oder Düse (25) vergleichen wird oder dass die erkannte Linse (24) und/oder Düse (25) von der Steuereinheit (13) oder der Software (17) übernommen wird.

6. Verfahren nach einem der vorhergehenden Ansprüche, **dadurch gekennzeichnet, dass** von der Kamera (23) mehrere Bilder (28) der Fokussiereinheit (12) bzw. der Linse (24) und/oder Düse (25), auf unterschiedlichen Positionen der Fokussiereinheit (12) aufgenommen werden.

7. Verfahren nach einem der vorhergehenden Ansprüche, **dadurch gekennzeichnet, dass** von der Kamera (23) ein Referenzbild der Fokussiereinheit (12) aufgenommen und in einer Datenbank hinterlegt wird.

8. Verfahren nach Anspruch 7, **dadurch gekennzeichnet, dass** am Referenzbild die Position der Linse (24) und/oder Düse (25) festgelegt und ein neu aufgenommenes Bild (28) an dieser Position ausgewertet wird.

9. Verfahren nach einem der vorhergehenden Ansprüche, **dadurch gekennzeichnet, dass** nach der Erkennung der Linse (24) und/oder Düse (25) diese mit der in der Software hinterlegten Linse (24) und/oder Düse (25) verglichen wird.

10. Verfahren nach einem der vorhergehenden Ansprüche, **dadurch gekennzeichnet, dass** die Erkennung der Linse (24) und/oder Düse (25) beim Start eine Jobs (18) durchgeführt wird.

11. Verfahren nach einem der vorhergehenden Ansprüche, **dadurch gekennzeichnet, dass** die erkannte Linse (24) und/oder Düse (25) auf einem Speichermedium (20), insbesondere in einer Cloud (20a), gespeichert werden.

12. Verfahren nach einem der vorhergehenden Ansprüche, **dadurch gekennzeichnet, dass** zum Bearbeiten des Werkstückes (7) ein von der Strahlenquelle (4) abgegebener Laserstrahl (10) über vorzugsweise Umlenkelemente (11) an zumindest eine Fokussiereinheit (12) gesendet wird, von der der Laserstrahl (10) in Richtung Werkstück (7) abgelenkt und zur Bearbeitung fokussiert wird, wobei die Steuerung über eine in einer Steuereinheit (13) laufende Software vorzugsweise durch Abarbeitung eines sogenannten Jobs (18), insbesondere von übergebenen oder geladenen Daten, erfolgt, wobei das Werkstück (7) durch Verstellung eines Schlittens (14) über vorzugsweise einen Riemenantrieb in X-Y-Richtung bearbeitet wird, wobei vorzugsweise an einer externen Komponente (15), insbesondere einem Computer oder einem Steuergerät, eine Grafik (16) und/oder ein Text (16) über eine handelsübliche oder eigene Software (17) erstellt wird, welche an die Steuereinheit (13) des Laserplotters (1) übertragen bzw. exportiert wird, die eine Konvertierung der übergebenen Daten, insbesondere der Grafik (16) und/oder des Textes (16), zum Steuern der einzelnen Elemente der Lasermaschine bzw. des Laserplotters (1) vornimmt.

13. Verfahren nach einem der vorhergehenden Ansprüche, **dadurch gekennzeichnet, dass** eine Bildaufnahme eines Codes (33) bzw. Beschriftung (33) von der Kamera (23) in annähernd senkrechter Richtung erfolgt, wobei die Linse (24) bzw. Linsenhalterung und/oder Düse (25) bzw. Düsenhalterung nach einem der Ansprüche 18 bis 24 ausgebildet ist.

14. Verfahren nach einem der vorhergehenden Ansprüche, **dadurch gekennzeichnet, dass** die Linse (24) bzw. Linsenhalterung und/oder Düse (25) bzw. Düsenhalterung mit einem Code (33) in Form eines QR-Codes (33) oder Datamatrix Code, insbesondere Datamatrix Code ECC200, versehen wird.

15. Verfahren nach einem der vorhergehenden Ansprüche, **dadurch gekennzeichnet, dass** in dem Code (33), insbesondere QR-Code (33) oder Datamatrix Code ECC200, weitere Informationen, wie die Abweichung vom idealen Fokuswert oder unterschiedliche Wellenlängen für unterschiedliche Fokuspunkte bzw. Brennweiten, hinterlegt werden.

16. Laserplotter (1) zum Gravieren, Markieren und/oder Beschriften eines Werkstückes (7), der einen Bearbeitungsraum (8) zum Positionieren des Werkstückes (7), zumindest ein vorzugsweise jedoch zwei Strahlenquellen (4) in Form von Lasern (5, 6) mit entsprechenden Umlenkelementen (11) und eine Steuereinheit (13) zum Steuern eines über vorzugsweise einen Riemenantrieb betriebenen Schlittens (14) mit einer daran verfahrbar angeordneter Fokussiereinheit (12) aufweist, wobei zur Bildaufnahme des Bearbeitungsraums eine Kamera (23) angeordnet ist, **dadurch gekennzeichnet, dass** die Kamera (23) im Deckel (21) des Gehäuses (3) des Laserplotters (1) angeordnet ist und sowohl in geschlossener als auch geöffneter Position des Deckels (21) auslösbar ist, wobei zur Aufnahme eines Bildes (28) der Fokussiereinheit (12) und/oder eines Teilbereichs der Fokussiereinheit (12), von der Kamera (23) im Deckel (21) diese in eine definierte Position (26) verbracht bzw. positioniert ist, wobei ein Analysetool zum Auswerten der Linse (24) und/oder Düse (25) ausgebildet ist.

17. Laserplotter (1) nach Anspruch 16, **dadurch gekennzeichnet, dass** das Analysetool zur Auswertung von optischen Merkmalen, insbesondere der Farbe des Linsen- und/oder Düsengehäuses (26,32), eines Aufdrucks am Linsen- und/oder Düsengehäuse (26,32), der geometrischen Form oder Oberflächenstruktur des Linsen- und/oder Düsengehäuses (26,32), ausgebildet ist.

18. Linsenhalterung zum automatischen Erkennen einer Linse (24) an einem Laserkopf (12) bzw. Fokussiereinheit (12) eines Laserplotters (1), umfassend zumindest ein Linsengehäuse (26), in das eine Linse (24a) befestigt, insbesondere eingeklebt, ist, wobei am Linsengehäuse (26) vorzugsweise Führungen (29) zur Aufnahme in ein Laserkopfgehäuse (12) bzw. Fokussiereinheit (12) angeordnet sind, **dadurch gekennzeichnet, dass** das Linsengehäuse (26) eine Gehäuseverlängerung (34), die aus den Laserkopf (12) vorspringt, aufweist, auf die ein Code (33) zur annähernd senkrechten Bildaufnahme einer Kamera (23) angeordnet ist, wobei der Code (33) bzw. die Beschriftung (33) parallel zum Bearbeitungstisch (9) auf einer Oberseite der Gehäuseverlängerung (34) aufgebracht ist.

19. Düsenhalterung zum automatischen Erkennen einer Düse (25) an einem Laserkopf (12) bzw. Fokussiereinheit (12) eines Laserplotters (1), umfassend zumindest ein Düsengehäuse (32), **dadurch gekennzeichnet, dass** das Düsengehäuse (32) eine Gehäuseverlängerung (35), die aus den Laserkopf (12) vorspringt, aufweist, auf die ein Code (33) zur annähernd senkrechten Bildaufnahme einer Kamera (23) angeordnet ist, wobei der Code (33) bzw. die Beschriftung (33) parallel zum Bearbeitungstisch (9) auf einer Oberseite der Gehäuseverlängerung (35) aufgebracht ist.

20. Halterung nach Anspruch 18 oder 19, **dadurch gekennzeichnet, dass** die Gehäuseverlängerung (34,35) eine Vertiefung (37) oder einen erhobenen Randbereich zum besseren Festhalten bei einem Linsentausch oder Düsentausch aufweist.

21. Halterung nach einem der vorhergehenden Ansprüche 18 bis 20, **dadurch gekennzeichnet, dass** der Code (33) in Form eines QR-Codes (33) oder Datamatrix Code, insbesondere Datamatrix Code ECC200, ausgebildet ist.

22. Halterung nach einem der vorhergehenden Ansprüche 18 bis 21, **dadurch gekennzeichnet, dass** der QR-Code (33) oder Datamatrix Code, insbesondere Datamatrix Code ECC200, innerhalb des erhobenen Randbereiches oder der Vertiefung (37) aufgebracht ist.

23. Halterung nach einem der vorhergehenden Ansprüche 18 bis 22, **dadurch gekennzeichnet, dass** in dem Code (33), insbesondere QR-Code (33) oder Datamatrix Code ECC200, weiter Informationen, wie die Abweichung vom idealen Fokuswert oder unterschiedliche Wellenlängen für unterschiedliche Fokuspunkte bzw. Brennweiten, hinterlegt sind.

24. Halterung nach einem der vorhergehenden Ansprüchen 18 bis 23, **dadurch gekennzeichnet, dass** die Linsenhalterung und/oder die Düsenhalterung zur Anwendung bzw. Ausführung im Verfahren nach einem der Ansprüche 1 bis 16 und/oder zum Einsatz in einem Laserplotter nach einem der Ansprüche 17 oder 18 ausgebildet ist.

## Claims

1. Method for detecting a lens (24) and/or nozzle (25) on a focusing unit (12) of a laser plotter (1) for cutting, engraving, marking and/or labeling a workpiece (7), wherein in a housing (3) of the laser plotter (1) at least one radiation source (4) in the form of a laser (5, 6) is used, wherein, when the radiation source (4) is activated, a laser beam (10) is guided via deflection elements (11) to a focusing unit (12) or laser head (12), and a processing table (9) or processing space (8) is captured via at least one camera (23), **characterized in that** the camera (23) is arranged in the lid (21) of the housing (3) of the laser plotter (1) and can be triggered both when the lid (21) is closed and when the lid (21) is open, wherein, for determining the lens (24) and/or nozzle (25), the focusing unit (12) or laser head (12) is adjusted to a defined position (31), at which the lens (24) and/or nozzle (25) is clearly visible for the camera (23) in the lid (21), whereupon an image (28) of the focusing unit (12) or laser head (12) is taken via the camera (23) in the lid (21) and, via an analysis tool, the lens (24) and/or nozzle (25) is detected in the image (28).

2. Method according to claim 1, **characterized in that** the detection of the lens (24) is carried out via optical features, such as the color of a lens housing (26) or an imprint on the lens housing (26) or a labeling (33) or engraving on the lens housing (26) or the geometric shape or surface structure of the lens housing (26).

3. Method according to claim 1 or 2, **characterized in that** the detection of the nozzle (25) is carried out via optical features, such as the color of the nozzle housing (32) or an imprint on the nozzle housing (32) or a labeling (33) or engraving on the nozzle housing (32) or the geometric shape or surface structure of the nozzle housing (32).

4. Method according to one of the preceding claims, **characterized in that** criteria or target values relating to the lenses (24) and/or nozzles (25) are stored in a database.

5. Method according to one of the preceding claims, **characterized in that** the detected lens (24) and/or nozzle (25) is compared with the lens (24) and/or nozzle (25) set in the control unit (13) or in software (17), or that the detected lens (24) and/or nozzle (25) is adopted by the control unit (13) or the software (17).

6. Method according to one of the preceding claims, **characterized in that** the camera (23) records multiple images (28) of the focusing unit (12) or of the lens (24) and/or nozzle (25) at different positions of the focusing unit (12).

7. Method according to one of the preceding claims, **characterized in that** the camera (23) records a reference image of the focusing unit (12) and stores it in a database.

8. Method according to claim 7, **characterized in that** the position of the lens (24) and/or nozzle (25) is defined on the reference image and a newly recorded image (28) is evaluated at this position.

9. Method according to one of the preceding claims, **characterized in that** after detection of the lens (24) and/or nozzle (25), this is compared with the lens (24) and/or nozzle (25) stored in the software.

10. Method according to one of the preceding claims, **characterized in that** detection of the lens (24) and/or nozzle (25) is performed at the start of a job (18).

11. Method according to one of the preceding claims, **characterized in that** the detected lens (24) and/or nozzle (25) is stored on a storage medium (20), in particular in a cloud (20a).

12. Method according to one of the preceding claims, **characterized in that**, for processing the workpiece (7), a laser beam (10) emitted by the radiation source (4) is sent via preferably deflection elements (11) to at least one focusing unit (12), from which the laser beam (10) is deflected in the direction of the workpiece (7) and focused for processing, wherein control is carried out via software running in a control unit (13), preferably by processing a so-called job (18), in particular passed or loaded data, wherein the workpiece (7) is processed by adjustment of a carriage (14), preferably via a belt drive, in the X-Y direction, wherein preferably at an external component (15), in particular a computer or a control device, a graphic (16) and/or a text (16) is created via commercially available or proprietary software (17), which is transmitted or exported to the control unit (13) of the laser plotter (1), which performs a conversion of the transmitted data, in particular of the graphic (16) and/or the text (16), for controlling the individual elements of the laser machine or of the laser plotter (1).

13. Method according to one of the preceding claims, **characterized in that** an image recording of a code (33) or labeling (33) is carried out by the camera (23) in an approximately perpendicular direction, wherein the lens (24) or lens holder and/or nozzle (25) or nozzle holder is designed according to one of claims 18 to 24.

14. Method according to one of the preceding claims, **characterized in that** the lens (24) or lens holder and/or nozzle (25) or nozzle holder is provided with a code (33) in the form of a QR code (33) or datamatrix code, in particular datamatrix code ECC200.

15. Method according to one of the preceding claims, **characterized in that** additional information, such as deviation from the ideal focus value or different wavelengths for different focal points or focal lengths, is stored in the code (33), in particular the QR code (33) or datamatrix code ECC200.

16. Laser plotter (1) for engraving, marking and/or labeling a workpiece (7), which has a processing space (8) for positioning the workpiece (7), at least one, preferably however two radiation sources (4) in the form of lasers (5, 6) with corresponding deflection elements (11), and a control unit (13) for controlling a carriage (14) driven preferably via a belt drive with a focusing unit (12) movably arranged thereon, wherein a camera (23) is arranged for image capture of the processing space, **characterized in that** the camera (23) is arranged in the lid (21) of the housing (3) of the laser plotter (1) and is triggerable both in the closed and in the open position of the lid (21), wherein, for recording an image (28) of the focusing unit (12) and/or a partial region of the focusing unit (12), the latter is moved or positioned by the camera (23) in the lid (21) into a defined position (26), wherein an analysis tool for evaluating the lens (24) and/or nozzle (25) is designed.

17. Laser plotter (1) according to claim 16, **characterized in that** the analysis tool is designed for evaluating optical features, in particular the color of the lens and/or nozzle housing (26, 32), an imprint on the lens and/or nozzle housing (26, 32), the geometric shape or surface structure of the lens and/or nozzle housing (26, 32).

18. Lens holder for automatic detection of a lens (24) on a laser head (12) or focusing unit (12) of a laser plotter (1), comprising at least one lens housing (26), in which a lens (24a) is fastened, in particular adhesively bonded, wherein guides (29) for insertion into a laser head housing (12) or focusing unit (12) are preferably arranged on the lens housing (26), **characterized in that** the lens housing (26) has a housing extension (34) projecting out of the laser head (12), on which a code (33) for approximately perpendicular image capture by a camera (23) is arranged, wherein the code (33) or the labeling (33) is applied parallel to the processing table (9) on an upper side of the housing extension (34).

19. Nozzle holder for automatic detection of a nozzle (25) on a laser head (12) or focusing unit (12) of a laser plotter (1), comprising at least one nozzle housing (32), **characterized in that** the nozzle housing (32) has a housing extension (35) projecting out of the laser head (12), on which a code (33) for approximately perpendicular image capture by a camera (23) is arranged, wherein the code (33) or the labeling (33) is applied parallel to the processing table (9) on an upper side of the housing extension (35).

20. Holder according to claim 18 or 19, **characterized in that** the housing extension (34, 35) has a recess (37) or a raised edge region for improved gripping during lens replacement or nozzle replacement.

21. Holder according to one of the preceding claims 18 to 20, **characterized in that** the code (33) is designed in the form of a QR code (33) or datamatrix code, in particular datamatrix code ECC200.

22. Holder according to one of the preceding claims 18 to 21, **characterized in that** the QR code (33) or datamatrix code, in particular datamatrix code ECC200, is applied within the raised edge region or the recess (37).

23. Holder according to one of the preceding claims 18 to 22, **characterized in that** additional information, such as deviation from the ideal focus value or different wavelengths for different focal points or focal lengths, is stored in the code (33), in particular the QR code (33) or datamatrix code ECC200.

24. Holder according to one of the preceding claims 18 to 23, **characterized in that** the lens holder and/or the nozzle holder is designed for application or execution in the method according to one of claims 1 to 16 and/or for use in a laser plotter according to one of claims 17 or 18.

## Revendications

1. Procédé destiné à détecter une lentille (24) et/ou une buse (25) sur une unité de focalisation (12) d'un traceur laser (1) pour la découpe, la gravure, le marquage et/ou l'inscription d'une pièce à usiner (7), dans lequel, dans un boîtier (3) du traceur laser (1), au moins une source de rayonnement (4) sous la forme d'un laser (5, 6) est utilisée, la source de rayonnement (4), lorsqu'elle est activée, produisant un faisceau laser (10) qui est guidé via des éléments de déviation (11) vers une unité de focalisation (12) ou une tête laser (12), et une table de travail (9) ou un espace de travail (8) étant acquis au moyen d'au moins une caméra (23), **caractérisé en ce que** la caméra (23) est disposée dans le couvercle (21) du boîtier (3) du traceur laser (1) et peut être déclenchée aussi bien en position fermée qu'en position ouverte du couvercle (21), la détermination de la lentille (24) et/ou de la buse (25) étant effectuée en déplaçant l'unité de focalisation (12) ou la tête laser (12) vers une position définie (31), dans laquelle la lentille (24) et/ou la buse (25) est bien visible pour la caméra (23) située dans le couvercle (21), puis une image (28) de l'unité de focalisation (12) ou de la tête laser (12) étant prise par la caméra (23) dans le couvercle (21), et la lentille (24) et/ou la buse (25) étant reconnue sur l'image (28) au moyen d'un outil d'analyse.

2. Procédé selon la revendication 1, **caractérisé en ce que** la détection de la lentille (24) est effectuée au moyen de caractéristiques optiques, telles que la couleur d'un boîtier de lentille (26), une impression sur le boîtier de lentille (26), un marquage (33) ou une gravure sur le boîtier de lentille (26), ou la forme géométrique ou la structure de surface du boîtier de lentille (26).

3. Procédé selon la revendication 1 ou 2, **caractérisé en ce que** la détection de la buse (25) est effectuée au moyen de caractéristiques optiques, telles que la couleur du boîtier de buse (32), une impression sur le boîtier de buse (32), un marquage (33) ou une gravure sur le boîtier de buse (32), ou la forme géométrique ou la structure de surface du boîtier de buse (32).

4. Procédé selon l'une quelconque des revendications précédentes, **caractérisé en ce que** des critères ou des valeurs de consigne relatifs aux lentilles (24) et/ou aux buses (25) sont enregistrés dans une base de données.

5. Procédé selon l'une quelconque des revendications précédentes, **caractérisé en ce que** la lentille (24) et/ou la buse (25) détectée est comparée à la lentille (24) et/ou à la buse (25) réglée dans l'unité de commande (13) ou dans un logiciel (17), ou **en ce que** la lentille (24) et/ou la buse (25) détectée est reprise par l'unité de commande (13) ou le logiciel (17).

6. Procédé selon l'une quelconque des revendications précédentes, **caractérisé en ce que** la caméra (23) prend plusieurs images (28) de l'unité de focalisation (12) ou de la lentille (24) et/ou de la buse (25) à différentes positions de l'unité de focalisation (12).

7. Procédé selon l'une quelconque des revendications précédentes, **caractérisé en ce que** la caméra (23) prend une image de référence de l'unité de focalisation (12) et l'enregistre dans une base de données.

8. Procédé selon la revendication 7, **caractérisé en ce que** la position de la lentille (24) et/ou de la buse (25) est définie sur l'image de référence, et une image nouvellement prise (28) est évaluée à cette position.

9. Procédé selon l'une quelconque des revendications précédentes, **caractérisé en ce que**, après la détection de la lentille (24) et/ou de la buse (25), celle-ci est comparée à la lentille (24) et/ou à la buse (25) enregistrée dans le logiciel.

10. Procédé selon l'une quelconque des revendications précédentes, **caractérisé en ce que** la détection de la lentille (24) et/ou de la buse (25) est effectuée au démarrage d'un travail (18).

11. Procédé selon l'une quelconque des revendications précédentes, **caractérisé en ce que** la lentille (24) et/ou la buse (25) détectée est enregistrée sur un support de stockage (20), en particulier dans un cloud (20a).

12. Procédé selon l'une quelconque des revendications précédentes, **caractérisé en ce que**, pour l'usinage de la pièce (7), un faisceau laser (10) émis par la source de rayonnement (4) est envoyé, de préférence via des éléments de déviation (11), vers au moins une unité de focalisation (12), à partir de laquelle le faisceau laser (10) est dévié en direction de la pièce (7) et focalisé pour l'usinage, la commande étant effectuée au moyen d'un logiciel s'exécutant dans une unité de commande (13), de préférence par le traitement d'un travail dit « job » (18), notamment de données transmises ou chargées, la pièce (7) étant usinée par déplacement d'un chariot (14), de préférence via un entraînement par courroie, selon les directions X-Y, une image graphique (16) et/ou un texte (16) étant créés, de préférence sur un composant externe (15), en particulier un ordinateur ou un appareil de commande, au moyen d'un logiciel standard ou propriétaire (17), puis transmis ou exportés vers l'unité de commande (13) du traceur laser (1), laquelle effectue une conversion des données transmises, en particulier de l'image graphique (16) et/ou du texte (16), pour la commande des différents éléments de la machine laser ou du traceur laser (1).

13. Procédé selon l'une quelconque des revendications précédentes, **caractérisé en ce qu'**une prise d'image d'un code (33) ou d'un marquage (33) est effectuée par la caméra (23) selon une direction approximativement perpendiculaire, la lentille (24) ou le support de lentille et/ou la buse (25) ou le support de buse étant conçus selon l'une des revendications 18 à 24.

14. Procédé selon l'une quelconque des revendications précédentes, **caractérisé en ce que** la lentille (24) ou le support de lentille et/ou la buse (25) ou le support de buse est muni(e) d'un code (33) sous la forme d'un code QR (33) ou d'un code Datamatrix, en particulier un code Datamatrix ECC200.

15. Procédé selon l'une quelconque des revendications précédentes, **caractérisé en ce que** des informations supplémentaires, telles qu'un écart par rapport à la valeur de focalisation idéale ou des longueurs d'onde différentes pour différents points focaux ou différentes distances focales, sont enregistrées dans le code (33), en particulier le code QR (33) ou le code Datamatrix ECC200.

16. Traceur laser (1) destiné à la gravure, au marquage et/ou à l'inscription d'une pièce (7), lequel comprend un espace de travail (8) pour le positionnement de la pièce (7), au moins une, de préférence toutefois deux sources de rayonnement (4) sous la forme de lasers (5, 6) avec des éléments de déviation (11) correspondants, ainsi qu'une unité de commande (13) pour commander un chariot (14) entraîné de préférence par courroie et portant une unité de focalisation (12) mobile, une caméra (23) étant disposée pour la prise d'images de l'espace de travail, **caractérisé en ce que** la caméra (23) est disposée dans le couvercle (21) du boîtier (3) du traceur laser (1) et peut être déclenchée aussi bien en position fermée qu'en position ouverte du couvercle (21), l'unité de focalisation (12) et/ou une zone partielle de celle-ci étant amenée ou positionnée par la caméra (23) située dans le couvercle (21) dans une position définie (26) pour la prise d'une image (28), un outil d'analyse étant prévu pour évaluer la lentille (24) et/ou la buse (25).

17. Traceur laser (1) selon la revendication 16, **caractérisé en ce que** l'outil d'analyse est conçu pour l'évaluation de caractéristiques optiques, en particulier la couleur du boîtier de lentille et/ou de buse (26, 32), une impression sur le boîtier de lentille et/ou de buse (26, 32), la forme géométrique ou la structure de surface du boîtier de lentille et/ou de buse (26, 32).

18. Support de lentille destiné à la détection automatique d'une lentille (24) sur une tête laser (12) ou une unité de focalisation (12) d'un traceur laser (1), comprenant au moins un boîtier de lentille (26), dans lequel une lentille (24a) est fixée, notamment collée, des guidages (29) étant de préférence disposés sur le boîtier de lentille (26) pour l'insertion dans un boîtier de tête laser (12) ou une unité de focalisation (12), **caractérisé en ce que** le boîtier de lentille (26) présente une extension de boîtier (34) faisant saillie hors de la tête laser (12), sur laquelle est disposé un code (33) destiné à une prise d'image approximativement perpendiculaire par une caméra (23), le code (33) ou le marquage (33) étant appliqué parallèlement à la table de travail (9) sur une face supérieure de l'extension de boîtier (34).

19. Support de buse destiné à la détection automatique d'une buse (25) sur une tête laser (12) ou une unité de focalisation (12) d'un traceur laser (1), comprenant au moins un boîtier de buse (32), **caractérisé en ce que** le boîtier de buse (32) présente une extension de boîtier (35) faisant saillie hors de la tête laser (12), sur laquelle est disposé un code (33) destiné à une prise d'image approximativement perpendiculaire par une caméra (23), le code (33) ou le marquage (33) étant appliqué parallèlement à la table de travail (9) sur une face supérieure de l'extension de boîtier (35).

20. Support selon la revendication 18 ou 19, **caractérisé en ce que** l'extension de boîtier (34, 35) comporte un évidement (37) ou une zone de bord relevée pour une meilleure préhension lors d'un remplacement de lentille ou de buse.

21. Support selon l'une quelconque des revendications précédentes 18 à 20, **caractérisé en ce que** le code (33) est réalisé sous la forme d'un code QR (33) ou d'un code Datamatrix, en particulier un code Datamatrix ECC200.

22. Support selon l'une quelconque des revendications précédentes 18 à 21, **caractérisé en ce que** le code QR (33) ou le code Datamatrix, en particulier le code Datamatrix ECC200, est appliqué à l'intérieur de la zone de bord relevée ou de l'évidement (37).

23. Support selon l'une quelconque des revendications précédentes 18 à 22, **caractérisé en ce que** des informations supplémentaires, telles qu'un écart par rapport à la valeur de focalisation idéale ou des longueurs d'onde différentes pour différents points focaux ou distances focales, sont enregistrées dans le code (33), en particulier le code QR (33) ou le code Datamatrix ECC200.

24. Support selon l'une quelconque des revendications précédentes 18 à 23, **caractérisé en ce que** le support de lentille et/ou le support de buse est conçu pour une application ou une mise en œuvre dans le procédé selon l'une quelconque des revendications 1 à 16 et/ou pour une utilisation dans un traceur laser selon l'une quelconque des revendications 17 ou 18.
